# EUROPEAN PATENT SPECIFICATION

(11) **EP 3 952 560 B1**
(45) Date of publication and mention of the grant of the patent: **14.10.2026**
(21) Application number: 20783709.7
(22) Date of filing: 14.02.2020
(51) Int. Cl.: H04W 72/02, H04L 5/00, H04L 1/1829, H04L 1/1607

(54) **COMMUNICATION METHOD, UPLINK CONTROL INFORMATION TRANSMISSION METHOD, APPARATUS, COMMUNICATION SYSTEM AND PROGRAM**
KOMMUNIKATIONSVERFAHREN, VERFAHREN ZUR ÜBERTRAGUNG VON UPLINK-STEUERUNGSINFORMATIONEN, VORRICHTUNG, KOMMUNIKATIONSSYSTEM UND PROGRAMM
PROCÉDÉ DE COMMUNICATION, PROCÉDÉ DE TRANSMISSION D'INFORMATIONS DE COMMANDE DE LIAISON MONTANTE, DISPOSITIF, SYSTÈME DE COMMUNICATION ET PROGRAMME

(30) Priority: 30.03.2019 CN 201910253724
(43) Date of publication of application: 09.02.2022
(73) Proprietor: Huawei Technologies Co., Ltd., Shenzhen, Guangdong 518129 (CN)
(72) Inventor: LI, Shengyu, Shenzhen, Guangdong 518129 (CN); GUAN, Lei, Shenzhen, Guangdong 518129 (CN); LI, Yuan, Shenzhen, Guangdong 518129 (CN); MA, Ruixiang, Shenzhen, Guangdong 518129 (CN)
(74) Representative: Gill Jennings & Every LLP
(86) International application number: PCT/CN2020/075415
(87) International publication number: WO 2020/199767

(56) References cited:
- WO-A1-2018/085790
- CN-A- 109 155 726
- CN-A- 109 391 388
- HUAWEI ET AL: "UCI enhancements for URLLC", vol. RAN WG1, no. Athens, Greece; 20190225 - 20190301, 21 February 2019 (2019-02-21), XP051600930, Retrieved from the Internet <URL:http://www.3gpp.org/ftp/tsg%5Fran/WG1%5FRL1/TSGR1%5F96/Docs/R1%2D1903234%2Ezip> [retrieved on 20190221]
- CATT: "UL control enhancements for URLLC", 3GPP DRAFT; R1-1902003, 1 March 2019 (2019-03-01), Athens, Greece, pages 1 - 8, XP051599698
- HUAWEI; HISILICON: "UCI enhancements for URLLC", 3GPP DRAFT; R1-1901558, 1 March 2019 (2019-03-01), Athens, Greece, pages 1 - 9, XP051599255

## Description

### TECHNICAL FIELD

This application relates to the field of wireless communication, and more specifically, to a communication method, an uplink control information transmission method, an apparatus, a communication system and a program.

### BACKGROUND

An ultra-reliable and low-latency communication (ultra-Reliablity and low-latency communications, uRLLC) service is defined in 5th generation mobile communication (5th Generation, 5G). An end-to-end uplink/downlink transmission latency of the uRLLC service can reach 0.5 millisecond (ms), and the uRLLC service is mainly applied to fields such as autonomous driving, unmanned factories, or intelligent transportation systems (intelligent transportation systems, ITS) in the future. In addition, it is clearly proposed in researches of 5G standards that a new architecture needs to be defined to support efficient coexistence of a plurality of services, for example, coexistence of an enhanced mobile broadband (enhanced mobile broadband, eMBB) service and the uRLLC service. In new radio (new radio, NR) Release (Release) 16, to improve downlink data transmission reliability of an uRLLC service within a tighter latency budget, hybrid automatic repeat request (hybrid automatic repeat request, HARQ) loopback time needs to be reduced. Therefore, more than one HARQ acknowledegment message is supported in one slot. In addition, the uRLLC service and the eMBB service have different reliability. Currently, it is specified that HARQ acknowledegment messages of uRLLC data and eMBB data are fed back separately.

In uplink transmission, NR does not support simultaneous transmission of uplink control information (uplink control information, UCI) on a plurality of physical uplink control channel (physical uplink control channel, PUCCH) resources. When a plurality of PUCCH resources overlap in time domain, uplink multiplexing, or referred to as uplink control information multiplexing (uplink control information multiplex, UCI MUX), needs to be performed. Currently, a prerequisite for UCI MUX in R15 is that overlapping PUCCH resources meet a multiplexing condition. The PUCCH resources are multiplexed only when the multiplexing condition is met. When there are a plurality of HARQ acknowledegment messages in one slot, PUCCH resources that carry the HARQ acknowledegment messages do not overlap at all in time domain, but may at least partially overlap with other PUCCH resources in time domain. For a case in which when a plurality of PUCCH resources overlap in time domain in one slot, some PUCCH resources meet a multiplexing condition, and some PUCCH resources do not meet a multiplexing condition, how to determine one or more UCI transmission resources is a problem to be urgently resolved.

HUAWEI ET AL: "UCI enhancements for URLLC", 3GPP DRAFT; R1-1903234, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE vol. RAN WG1, no. Athens, Greece discloses potential enhancements ot UCI transmission.

### SUMMARY

This application provides a communication method, an uplink control information transmission method, an apparatus, a communication system and a program, to determine one or more UCI transmission resources when a plurality of PUCCH resources overlap in time domain. The invention is defined by the appended claims. domain.

As defined by claim 1, the invention provides a communication method, comprising: determining a first physical uplink control channel, PUCCH, resource, a second PUCCH resource, and a third PUCCH resource, wherein the first PUCCH resource is used to carry first uplink control information, UCI, the second PUCCH resource is used to carry second UCI, and the third PUCCH resource is used to carry third UCI; and the first PUCCH resource and the third PUCCH resource at least partially overlap in time domain, the second PUCCH resource and the third PUCCH resource at least partially overlap in time domain, the first PUCCH resource and the third PUCCH resource have a same priority, and the second PUCCH resource and the third PUCCH resource have different priorities; and determining a fourth PUCCH resource, wherein the fourth PUCCH resource is used to transmit the first UCI and the third UCI; wherein the priority of each of the first, second, and third PUCCH resources is determined based on the priority of the respective first, second, and third UCIs carried by said first, second, and third PUCCH resources.

In the foregoing technical solution, when determining that the first PUCCH resource and the third PUCCH resource that meet the multiplexing condition exist, the terminal device determines a new PUCCH resource, namely, the fourth PUCCH resource. The terminal device may send the first UCI and the third UCI by using the fourth PUCCH resource instead of the first PUCCH resource and the third PUCCH resource. In other words, the terminal device first performs uplink multiplexing on a PUCCH resource that meets a multiplexing condition. Correspondingly, when determining that the first PUCCH resource and the third PUCCH resource that meet the multiplexing condition exist, the network device determines a new PUCCH resource, namely, the fourth PUCCH resource. The network device may receive the first UCI and the third UCI by using the fourth PUCCH resource instead of the first PUCCH resource and the third PUCCH resource. In other words, the network device first performs uplink multiplexing on the PUCCH resource that meets the multiplexing condition.

As defined by claim 11, the invention provides an uplink control information transmission method, comprising: determining a first physical uplink control channel, PUCCH, resource, a second PUCCH resource, and a third PUCCH resource, wherein the first PUCCH resource is used to transmit first uplink control information, UCI, the second PUCCH resource is used to transmit second UCI, and the third PUCCH resource is used to transmit third UCI; and the first PUCCH resource and the third PUCCH resource at least partially overlap in time domain, the second PUCCH resource and the third PUCCH resource at least partially overlap in time domain, a start symbol of the first PUCCH resource is earlier than a start symbol of the second PUCCH resource, the first PUCCH resource and the third PUCCH resource have different priorities, and the second PUCCH resource and the third PUCCH resource have a same priority; and when a priority of the first PUCCH resource is higher than a priority of the third PUCCH resource, transmitting the first UCI by using the first PUCCH resource, transmitting the second UCI by using the second PUCCH resource, and determining to stop using the third PUCCH resource to transmit the third UCI; wherein the priority of each of the first, second, and third PUCCH resources is determined based on the priority of the respective first, second, and third UCIs carried by said first, second, and third PUCCH resources.

Preferred embodiments of the communication method of claim 1 or the uplink control information transmission method of claim 11 are defined by claims 2 to 10 and 12 to 16.

As defined by claim 17, the invention provides an apparatus, comprising a processor, wherein the processor is coupled to a memory; the memory is configured to store a computer program or instructions; and the processor is configured to execute the computer program or the instructions stored in the memory to cause the apparatus to perform the method according to any one of claims 1 to 10, or the method according to any one of claims 15 or 16 when dependent on claim 1, or to cause the apparatus to perform the method according to any one of claims 11 to 14, or the method according to any one of claims 15 or 16 when dependent on claim 11.

As defined by claim 18, the invention provides a communication system, the communication system comprising: a first apparatus configured to perform the method according to any one of claims 1 to 10, or the method according to any one of claims 15 or 16 when dependent on claim 1, and a second apparatus configured to receive the first UCI and the third UCI from the first apparatus, or the communication system comprising: a first apparatus configured to perform the method according to any one of claims 11 to 14, or the method according to any one of claims 15 or 16 when dependent on claim 11, and a second apparatus configured to receive the first UCI and the second UCI from the first apparatus.

As defined by claim 19, the invention provides a program, comprising instructions which, when executed by a processor of an apparatus, cause the apparatus to perform the method according to any one of claims 1 to 10, or the method according to any one of claims 15 or 16 when dependent on claim 1, or cause the apparatus to perform the method according to any one of claims 11 to 14, or the method according to any one of claims 15 or 16 when dependent on claim 11.

### BRIEF DESCRIPTION OF DRAWINGS

FIG. 1 is a schematic diagram of a communication system to which a communication method according to an embodiment of this application is applicable;
FIG. 2 is a schematic diagram of an application scenario of a communication method according to an embodiment of this application;
FIG. 3 is a schematic diagram of another application scenario of a communication method according to an embodiment of this application;
FIG. 4 is a schematic flowchart of a communication method according to an embodiment of this application;
FIG. 5 is a schematic diagram of overlapping or completely non-overlapping PUCCH resources in time domain according to an embodiment of this application;
FIG. 6 is a schematic diagram of another application scenario of a communication method according to an embodiment of this application;
FIG. 7 is a schematic diagram of another application scenario of a communication method according to an embodiment of this application;
FIG. 8 is a schematic flowchart of another communication method according to an embodiment of this application;
FIG. 9a to FIG. 9d are schematic diagrams of another application scenario of a communication method according to an embodiment of this application;
FIG. 10 is a schematic flowchart of another communication method according to an embodiment of this application;
FIG. 11a and FIG. 11b are schematic diagrams of another application scenario of a communication method according to an embodiment of this application;
FIG. 12 is a schematic diagram of a terminal device according to an embodiment of this application;
FIG. 13 is a schematic diagram of a structure of a network device according to an embodiment of this application; and
FIG. 14 is a schematic diagram of a structure of a communication apparatus according to an embodiment of this application.

### DESCRIPTION OF EMBODIMENTS

The following describes technical solutions in this application with reference to the accompanying drawings.

The technical solutions in embodiments of this application may be applied to various communication systems, for example, a long term evolution (long term evolution, LTE) system, a worldwide interoperability for microwave access (worldwide interoperability for microwave access, WiMAX) communication system, a 5th generation (5th Generation, 5G) system such as a new generation radio access technology (new radio access technology, NR), and a future communication system such as a 6G system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, the term "for example" in the embodiments of this application is used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

In the embodiments of this application, "information (information)", "signal (signal)", "message (message)", or "channel (channel)" may be interchangeably used sometimes. It should be noted that meanings expressed by the terms are consistent when differences of the terms are not emphasized. The terms "of", "corresponding, relevant (corresponding, relevant)", and "corresponding (corresponding)" may sometimes be used together. It should be noted that the meanings to be expressed are consistent without emphasizing their distinctions.

In the embodiments of this application, a first PUCCH resource and a PUCCH1 resource may sometimes be alternately used. Similarly, a second PUCCH resource and a PUCCH2 resource may sometimes be alternately used, a third PUCCH resource and a PUCCH3 resource may sometimes be alternately used, and a fourth PUCCH resource and a PUCCH4 resource may sometimes be alternately used, a fifth PUCCH resource and a PUCCH5 resource may sometimes be alternately used. It should be noted that when differences are not emphasized, meanings to be expressed are the same. In addition, first UCI and UCI1, second UCI and UCI2, and third UCI and UCI3 may sometimes be alternately used, and a first HARQ acknowledgement message and a HARQ-ACK1, and a second HARQ acknowledgement message and a HARQ-ACK2 may sometimes be alternately used.

A network architecture and a service scenario described in the embodiments of this application are intended to describe the technical solutions in the embodiments of this application more clearly, and do not constitute any limitation on the technical solutions provided in the embodiments of this application. A person of ordinary skill in the art may know that with evolution of the network architecture and emergence of a new service scenario, the technical solutions provided in the embodiments of this application are also applicable to a similar technical problem.

The embodiments of this application may be applied to a time division duplex (time division duplex, TDD) scenario, or may be applied to a frequency division duplex (frequency division duplex, FDD) scenario.

The embodiments of this application may be applied to a conventional typical network or a future UE-centric (UE-centric) network. A non-cell (Non-cell) network architecture is introduced to the UE-centric network. To be specific, a large quantity of small cells are deployed in a specific area to form a hyper cell (Hyper cell), and each small cell is a transmission point (Transmission Point, TP) or a TRP of the hyper cell, and is connected to a centralized controller (controller). When the UE moves in the hyper cell, a network side device selects a new sub-cluster (sub-cluster) for the UE in real time to serve the UE, to avoid a real cell handover, and implement UE service continuity. The network side device includes a radio network device.

In the embodiments of this application, an NR network scenario in a wireless communication network is used to describe some scenarios. It should be noted that the solutions in the embodiments of this application may be further applied to another wireless communication network, and a corresponding name may also be replaced with a name of a corresponding function in the another wireless communication network.

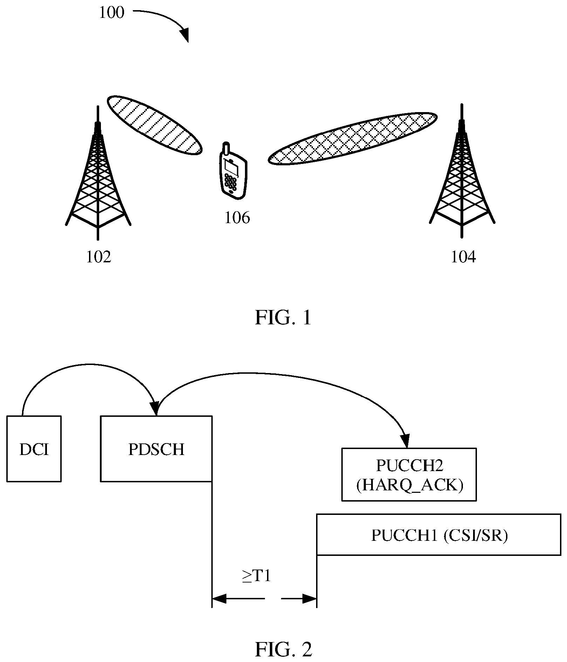

For ease of understanding of the embodiments of this application, a communication system shown in FIG. 1 is first used as an example to describe in detail a communication system to which the embodiments of this application are applicable. FIG. 1 is a schematic diagram of the communication system to which an embodiment of this application is applicable. As shown in FIG. 1, the communication system 100 includes a network device 102 and a terminal device 106. The network device 102 may have a plurality of antennas, and the terminal device may also have a plurality of antennas. Optionally, the communication system may further include a network device 104, and the network device 104 may also have a plurality of antennas.

It should be understood that the network device 102 or the network device 104 may further include a plurality of components (for example, a processor, a modulator, a multiplexer, a demodulator, or a de-multiplexer) related to signal sending and receiving.

The network device is a device having a wireless transceiver function or a chip that may be disposed in the device. The device includes but is not limited to: an evolved NodeB (evolved Node B, eNB), a radio network controller (radio network controller, RNC), a NodeB (Node B, NB), a base station controller (base station controller, BSC), a base transceiver station (base transceiver station, BTS), a home NodeB (for example, a home evolved NodeB, or a home Node B, HNB), a baseband unit (baseband unit, BBU), or an access point (access point, AP), a wireless relay node, a wireless backhaul node, a transmission point (transmission and reception point, TRP or transmission point, TP), or the like in a wireless fidelity (wireless fidelity, Wi-Fi) system. Alternatively, the network device may be a gNB or a transmission point (TRP or TP) in a 5G system, such as an NR system, or one antenna panel or a group of antenna panels (including a plurality of antenna panels) of a base station in the 5G system, or may be a network node that constitutes a gNB or a transmission point, for example, a baseband unit (BBU) or a distributed unit (DU, distributed unit).

In some deployments, the gNB may include a centralized unit (centralized unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in this architecture, higher layer signaling, for example, RRC signaling or PHCP signaling, may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device may also be referred to as user equipment (user equipment, UE), an access terminal, a subscriber unit, a subscriber station, a mobile station, a remote station, a remote terminal, a mobile device, a user terminal, a terminal, radio communication equipment, a user agent, a user apparatus, or the like. In the embodiments of this application, the terminal device may be a mobile phone (mobile phone), a tablet computer (pad), an intelligent printer, a train detector, a gas station detector, a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. In this application, the terminal device and a chip that may be disposed in the terminal device are collectively referred to as the terminal device.

The network device 102 and the network device 104 each may communicate with a plurality of terminal devices (for example, the terminal device 106 shown in the figure). The network device 102 and the network device 104 may communicate with any quantity of terminal devices similar to the terminal device 106. However, it should be understood that a terminal device communicating with the network device 102 and a terminal device communicating with the network device 104 may be the same or may be different. The terminal device 106 shown in FIG. 1 may simultaneously communicate with the network device 102 and the network device 104, but this shows only a possible scenario. In some scenarios, the terminal device may communicate with only the network device 102 or the network device 104. This is not limited in this application.

It should be understood that FIG. 1 is merely a simplified schematic diagram used as an example for ease of understanding. The communication system may further include another network device or another terminal device that is not shown in FIG. 1.

Currently, NR Release (Release) 15 defines a multiplexing condition for UCI MUX when PUCCH resources overlap. For example, a PUCCH1 resource partially overlaps a PUCCH2 resource in time domain. When at least one of the PUCCH1 resource or the PUCCH2 resource is used to carry a HARQ acknowledegment message, a multiplexing condition is as follows: A distance between a start symbol of each of the PUCCH1 resource and the PUCCH2 resource and an end symbol of a physical downlink shared channel (physical downlink shared channel, PDSCH) corresponding to the HARQ acknowledegment message needs to be greater than or equal to a first threshold, as shown in FIG. 2. The PDSCH corresponding to the HARQ-ACK means that the HARQ-ACK indicates whether the PDSCH is correctly decoded. A specific value of the first threshold is predefined in a protocol, and is related to a subcarrier spacing, a UE capability, a mapping type of the PDSCH (that is, a mapping location type of a demodulation reference signal (DMRS) on the PDSCH), and a time domain length of the PDSCH. Under different conditions (for example, in case of different mapping types of PDSCHs or different time domain lengths of PDSCHs), specific values of the first threshold may be different. The predefining in a protocol means that a base station and/or UE may separately determine a specific value of the first threshold based on parameters such as an uplink subcarrier spacing, a UE capability, a mapping type of the PDSCH, and a time domain length. For same transmission, specific values of the first threshold that are determined by the base station and/or the UE are the same. It should be noted that in the following descriptions, specific values of the first threshold in the first multiplexing condition, the second multiplexing condition, the third multiplexing condition, the fourth multiplexing condition, and the fifth multiplexing condition may be the same or different.

It should be noted that the multiplexing condition generally refers to a condition used to determine whether the UE can perform UCI MUX on the PUCCH1 resource and the PUCCH2 resource that overlap in time domain, and specific condition content is not limited. For example, the multiplexing condition includes one or more of the following: A distance between the start symbol of each of the PUCCH1 resource and the PUCCH2 resource and an end symbol of a slot in which the PDSCH resource corresponding to the HARQ acknowledegment message is located is greater than or equal to X1, a distance between the start symbol of each of the PUCCH1 resource and the PUCCH2 resource and a start symbol of the PDSCH corresponding to the HARQ acknowledegment message is greater than or equal to X2, or a distance between the start symbol of each of the PUCCH1 resource and the PUCCH2 resource and an end symbol of DCI that is used to schedule the PDSCH corresponding to the HARQ acknowledegment message is greater than or equal to X3, where values of X1, X2, and X3 are predefined in a protocol.

It may be understood that, in actual use, the multiplexing condition mentioned in the embodiments of this application may be equivalently replaced with another multiplexing condition. For example, that the distance between the start symbol of each of the PUCCH1 resource and the PUCCH2 resource and the end symbol of the physical downlink shared channel (physical downlink shared channel, PDSCH) corresponding to the HARQ acknowledegment message is greater than or equal to the first threshold may be equivalently replaced with that a distance between the start symbol of each of the PUCCH1 resource and the PUCCH2 resource and a start symbol of the physical downlink shared channel (physical downlink shared channel, PDSCH) corresponding to the HARQ acknowledegment message is greater than or equal to a sum of the first threshold and a quantity of symbols of the physical downlink shared channel (physical downlink shared channel, PDSCH) corresponding to the HARQ acknowledegment message. A specific replacement manner is not described herein.

It should be noted that if the PUCCH1 resource and the PUCCH2 resource do not carry the HARQ acknowledegment message, for example, both the PUCCH1 resource and the PUCCH2 resource are used to carry CSI and/or an SR, both the PUCCH1 resource and the PUCCH2 resource are configured by a higher layer. In this case, uplink multiplexing may be directly performed on the PUCCH1 resource and the PUCCH2 resource by default, and a multiplexing condition does not need to be met.

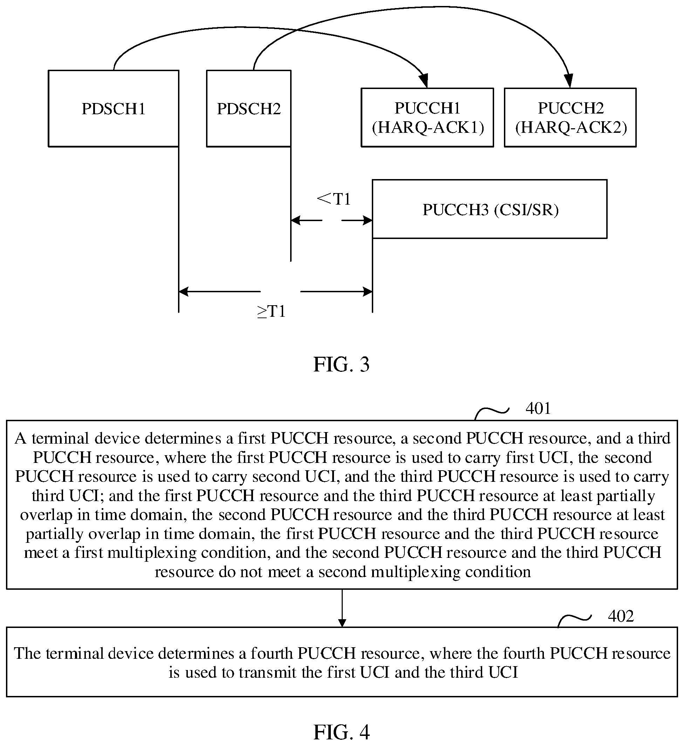

In R15, when UCI carried by a plurality of PUCCH resources in one slot needs to be sent, some of these PUCCH resources may overlap in time domain, and some may not overlap in time domain. As shown in FIG. 3, currently, in R15, behavior of UE is specified as follows:

If a plurality of PUCCH resources overlap in time domain, uplink multiplexing can be performed only when the PUCCH resources meet a multiplexing condition. Otherwise, it is considered as an error case (a UE behavior is not specified). For example, in FIG. 3, both a PUCCH1 resource and a PUCCH2 resource overlap with a PUCCH3 resource in time domain, and a distance between a start symbol of the PUCCH3 resource and a PDSCH1 corresponding to a HARQ acknowledegment message 1 is greater than or equal to a first threshold, but a distance between the start symbol of the PUCCH3 resource and a PDSCH2 corresponding to a HARQ acknowledegment message 2 is less than the first threshold. In this case, the PUCCH3 resource and the PUCCH1 resource meet a multiplexing condition, and the PUCCH3 resource and the PUCCH2 resource do not meet a multiplexing condition. This case is considered as an error case in an existing protocol.

Therefore, for the case in which the plurality of PUCCH resources at least partially overlap in time domain, some PUCCH resources meet a multiplexing condition, and some PUCCH resources do not meet a multiplexing condition, this application provides a communication method, to determine one or more UCI transmission resources when a plurality of PUCCH resources overlap in time domain.

The embodiments of this application provide a communication method. The method may be performed by a terminal device, or may be performed by a network device. In the embodiments of this application, the terminal device in the following content may be the terminal device 106 shown in FIG. 1, and the network device in the following content may be the network device 102 shown in FIG. 1. It should be understood that in this application, steps performed by the network device may alternatively be specifically performed by a module or a component of the network device, for example, may be performed by a chip in the network device, and steps performed by the terminal device may alternatively be specifically performed by a module or a component of the terminal device, for example, may be performed by a chip in the terminal device. The following embodiments are described by using the terminal device as an execution body. It may be understood that descriptions in the following embodiments, in particular, descriptions related to determining one or more UCI transmission resources when a plurality of PUCCH resources overlap in time domain, may be correspondingly performed by the network device. Differences between applying the following embodiments to the network device and applying the following embodiments to the terminal device lie in: Serving as a receive end of a PUCCH, the network device correspondingly receives UCI from the terminal device by using a determined PUCCH resource; and serving as a scheduler of the PUCCH resource, the network device sends indication information to the terminal device to indicate determining of the PUCCH resource to the terminal device. In the following embodiments, another receiving action of the terminal device is correspondingly a sending action of the network device, and sending of the terminal device is correspondingly receiving of the network device. Details are not described herein. A specific rule of determining a PUCCH resource used to send and/or receive UCI is applicable to both the network device and the terminal device, so that the network device and the terminal device determine, by using the same rule, a PUCCH resource used for UCI, to implement efficient transmission of the UCI.

For example, FIG. 4 shows a communication method according to an embodiment of this application. The method is performed by a terminal device. The method includes the following steps.

Step 401. The terminal device determines a first PUCCH resource, a second PUCCH resource, and a third PUCCH resource.

A PUCCH resource may be determined based on indication information sent by a network device, and the indication information may be carried in signaling sent by the network device to the terminal device. The signaling in this embodiment of this application may be one or more of radio resource control (radio resource control, RRC) signaling, a medium access control (medium access control, MAC) control element (control element, CE), or physical layer signaling. The physical layer signaling herein may be downlink control information (Downlink Control Information, DCI). In addition, the PUCCH resource is used to carry UCI. The UCI may include one or a combination of a plurality of a hybrid automatic repeat request (hybrid automatic repeat request, HARQ) acknowledgement/negative acknowledegment (acknowledgement/negative acknowledgement, ACK/NACK) message, a scheduling request (scheduling request, SR), or channel state information (Channel State Information, CSI), where the CSI may further include one or a combination of a plurality of a channel quality indication (channel quality indication, CQI), a precoding matrix index (precoding matrix index, PMI), or a rank indication (rank indication, RI). Specific signaling carrying the indication information may be determined based on a protocol agreement, or based on a protocol agreement and an actual scenario. This is not limited herein.

In this embodiment of this application, the first PUCCH resource is used to carry first UCI, the second PUCCH resource is used to carry second UCI, and the third PUCCH resource is used to carry third UCI. The first PUCCH resource and the third PUCCH resource at least partially overlap in time domain, the second PUCCH resource and the third PUCCH resource at least partially overlap in time domain, the first PUCCH resource and the third PUCCH resource meet a first multiplexing condition, and the second PUCCH resource and the third PUCCH resource do not meet a second multiplexing condition.

It should be noted that, in an optional design, after determining time domain information of the PUCCH resource based on the indication information sent by the network device, the terminal device may determine that the first PUCCH resource and the third PUCCH resource meet the first multiplexing condition, and that the second PUCCH resource and the third PUCCH resource do not meet the second multiplexing condition.

The first multiplexing condition may meet one or more of the following a1, a2, a3, and a4:
a1. The first UCI and/or the third UCI each include/includes a HARQ acknowledegment message, and a distance between an earliest start symbol of the first PUCCH resource and the third PUCCH resource and an end symbol of a PDSCH resource corresponding to the HARQ acknowledegment message is greater than or equal to a first threshold.
a2. Neither the first UCI nor the third UCI includes a HARQ acknowledegment message.
a3. The first UCI and the third UCI have a same priority.
a4. The first UCI and the third UCI have different priorities, and time domain positions and/or transmission code rates of the first PUCCH resource, the third PUCCH resource, and a fourth PUCCH resource meet a preset relationship, where the fourth PUCCH resource is used to carry the first UCI and the third UCI (that is, if the first UCI and the third UCI are multiplexed, the UE determines to use the fourth PUCCH resource to transmit the first UCI and the third UCI).

Optionally, the preset relationship includes: When a priority of the first UCI is higher than that of the third UCI, an end symbol of the fourth PUCCH resource is not later than an end symbol of the first PUCCH resource; or an end symbol of the fourth PUCCH resource is later than an end symbol of the first PUCCH resource and an end symbol difference is less than or equal to a second threshold. Optionally, the preset relationship includes: When the priority of the first UCI is higher than that of the third UCI, a coding rate on the fourth PUCCH resource is not greater than a coding rate on the first PUCCH resource; or a coding rate on the fourth PUCCH resource is greater than a coding rate on the first PUCCH resource and a coding rate difference is less than or equal to a third threshold. Similarly, when the priority of the first UCI is lower than that of the third UCI, the end symbol of the fourth PUCCH resource is not later than an end symbol of the third PUCCH resource; or the end symbol of the fourth PUCCH resource is later than an end symbol of the third PUCCH resource and an end symbol difference is less than or equal to a fourth threshold. Optionally, the preset relationship includes: When the priority of the first UCI is lower than that of the third UCI, the coding rate on the fourth PUCCH resource is not greater than a coding rate on the third PUCCH resource; or the coding rate on the fourth PUCCH resource is greater than a coding rate on the third PUCCH resource and a coding rate difference is less than or equal to a fifth threshold. Specifically, values of the second threshold, the third threshold, the fourth threshold, and the fifth threshold may be predefined in a protocol or determined according to an actual system design.

In addition, the second multiplexing condition may meet one or more of the following b1, b2, b3, and b4:
b1. The second UCI and/or the third UCI each include/includes a HARQ acknowledegment message, and a distance between an earliest start symbol of the second PUCCH resource and the third PUCCH resource and an end symbol of a PDSCH resource corresponding to the HARQ acknowledegment message is greater than or equal to a first threshold.
b2. Neither the second UCI nor the third UCI includes a HARQ acknowledegment message.
b3. The second UCI and the third UCI have a same priority.
b4. The second UCI and the third UCI have different priorities, and time domain positions and/or transmission code rates of the second PUCCH resource, the third PUCCH resource, and a sixth PUCCH resource meet a preset relationship, where the sixth PUCCH resource is used to carry the second UCI and the third UCI (that is, if the second UCI and the third UCI are multiplexed, the UE determines to use the sixth PUCCH resource to transmit the second UCI and the third UCI).

Optionally, the preset relationship includes: When a priority of the second UCI is higher than that of the third UCI, an end symbol of the sixth PUCCH resource is not later than an end symbol of the second PUCCH resource; or an end symbol of the sixth PUCCH resource is later than an end symbol of the second PUCCH resource and an end symbol difference is less than or equal to a second threshold. Optionally, the preset relationship includes: When the priority of the second UCI is higher than that of the third UCI, a coding rate on the sixth PUCCH resource is not greater than a coding rate on the second PUCCH resource; or a coding rate on the sixth PUCCH resource is greater than a coding rate on the second PUCCH resource and a coding rate difference is less than or equal to a third threshold. Similarly, when the priority of the second UCI is lower than that of the third UCI, the end symbol of the sixth PUCCH resource is not later than an end symbol of the third PUCCH resource; or the end symbol of the sixth PUCCH resource is later than an end symbol of the third PUCCH resource and an end symbol difference is less than or equal to a fourth threshold. Optionally, the preset relationship includes: When the priority of the second UCI is lower than that of the third UCI, the coding rate on the sixth PUCCH resource is not greater than a coding rate on the third PUCCH resource; or the coding rate on the sixth PUCCH resource is greater than a coding rate on the third PUCCH resource and a coding rate difference is less than or equal to a fifth threshold. Specifically, values of the second threshold, the third threshold, the fourth threshold, and the fifth threshold may be predefined in a protocol or determined according to an actual system design.

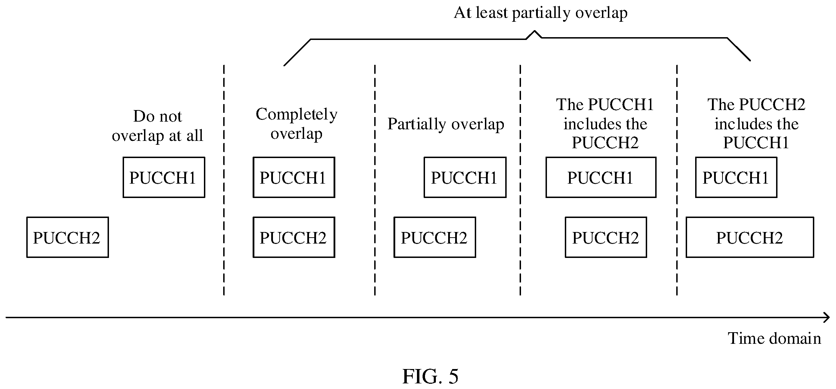

Refer to FIG. 5, a PUCCH1 resource and a PUCCH2 resource are used as an example in this embodiment of this application to show a plurality of possible cases in which the PUCCH1 resource and the PUCCH2 resource at least partially overlap and do not overlap in time domain. For example, the PUCCH1 resource and the PUCCH2 resource do not overlap at all, the PUCCH1 resource and the PUCCH2 resource completely overlap, the PUCCH1 resource and the PUCCH2 resource partially overlap, the PUCCH1 resource includes the PUCCH2 resource and occupies more time domain resources, or the PUCCH2 resource includes the PUCCH1 resource and occupies more time domain resources.

Step 402. The terminal device determines the fourth PUCCH resource, where the fourth PUCCH resource is used to transmit the first UCI and the third UCI.

Optionally, the terminal device determines to stop using the first PUCCH resource to send the first UCI, and determines to stop using the third PUCCH resource to send the third UCI. Herein, "determining to stop using" has two meanings: When the first PUCCH resource or the third PUCCH resource has started to be sent, the terminal device stops sending the first PUCCH resource or the third PUCCH resource on a subsequent time domain symbol. When the first PUCCH resource or the third PUCCH resource has not started to be sent, the terminal device does not send the first PUCCH resource or the third PUCCH resource. Optionally, when the first PUCCH resource and the third PUCCH resource meet the first multiplexing condition, "determining to stop using" is equivalent to "not using".

In the foregoing technical solution, when determining that the first PUCCH resource and the third PUCCH resource that meet the multiplexing condition exist, the terminal device determines a new PUCCH resource, namely, the fourth PUCCH resource. The terminal device may send the first UCI and the third UCI on the fourth PUCCH resource, determine to stop using the first PUCCH resource to send the first UCI, and determine to stop using the third PUCCH resource to send the third UCI.

Optionally, the fourth PUCCH resource is determined based on a total quantity of bits of the first UCI and the third UCI. Optionally, when the first UCI includes a HARQ acknowledegment message and/or the second UCI includes a HARQ acknowledegment message, the fourth PUCCH resource may be determined jointly based on the total quantity of bits of the first UCI and the third UCI and first indication information. The first indication information is PUCCH resource indication information in the last piece of DCI in DCI corresponding to all HARQ acknowledegment messages in the first UCI and the third UCI. DCI corresponding to a HARQ acknowledegment message is DCI used to schedule a PDSCH corresponding to the HARQ acknowledegment message, and the last piece of DCI may be the last piece of DCI received by the UE.

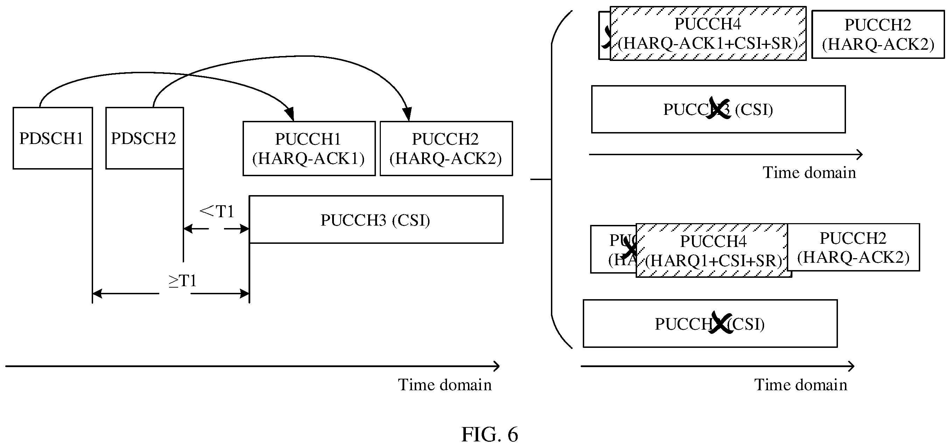

In an optional design, the first PUCCH resource, the second PUCCH resource, and the third PUCCH resource in step 401 may further meet the following condition: A start symbol of the first PUCCH resource is earlier than a start symbol of the second PUCCH resource. As shown in FIG. 6, a start symbol of a PUCCH1 resource is earlier than a start symbol of a PUCCH2 resource.

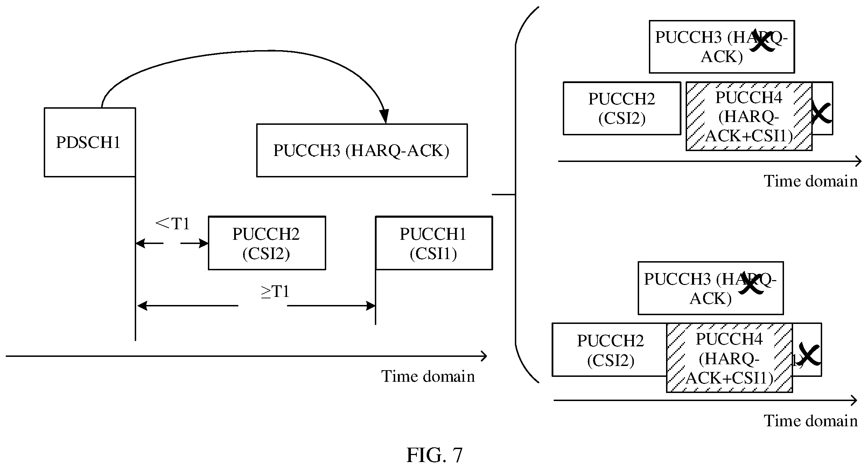

Alternatively, in another optional design, the first PUCCH resource, the second PUCCH resource, and the third PUCCH resource in step 401 may further meet the following condition: A start symbol of the second PUCCH resource is earlier than a start symbol of the first PUCCH resource. As shown in FIG. 7, a start symbol of a PUCCH2 resource is earlier than a start symbol of a PUCCH1 resource.

In an optional design, the first PUCCH resource and the second PUCCH resource do not overlap at all in time domain; or the first PUCCH resource and the second PUCCH resource at least partially overlap in time domain, and the first PUCCH resource and the second PUCCH resource do not meet a third multiplexing condition.

The third multiplexing condition may meet any one or more of the following c1, c2, c3, and c4:
c1. The first UCI and/or the second UCI each include/includes a HARQ acknowledegment message, and a distance between an earliest start symbol of the first PUCCH resource and the second PUCCH resource and an end symbol of a PDSCH resource corresponding to the HARQ acknowledegment message is greater than or equal to a first threshold.
c2. Neither the first UCI nor the second UCI includes a HARQ acknowledegment message.
c3. The first UCI and the second UCI have a same priority.
c4. The first UCI and the second UCI have different priorities, and time domain positions and transmission code rates of the first PUCCH resource, the second PUCCH resource, and a seventh PUCCH resource meet a preset relationship, where the seventh PUCCH resource is used to carry the first UCI and the second UCI (that is, if the first UCI and the second UCI are multiplexed, the UE determines to use the seventh PUCCH resource to transmit the first UCI and the second UCI).

Optionally, the preset relationship includes: When a priority of the first UCI is higher than that of the second UCI, an end symbol of the seventh PUCCH resource is not later than an end symbol of the first PUCCH resource; or an end symbol of the seventh PUCCH resource is later than an end symbol of the first PUCCH resource and an end symbol difference is less than or equal to a second threshold. Optionally, the preset relationship includes: When the priority of the first UCI is higher than that of the second UCI, a coding rate on the seventh PUCCH resource is not greater than a coding rate on the first PUCCH resource; or a coding rate on the seventh PUCCH resource is greater than a coding rate on the first PUCCH resource and a coding rate difference is less than or equal to a third threshold.

In an optional design, the first UCI and the second UCI may be HARQ acknowledgement messages, and the third UCI may be at least one of a HARQ acknowledgement message, CSI, and an SR. Refer to FIG. 6. UCI1 carried by the PUCCH1 resource is a HARQ-ACK1, UCI2 carried by the PUCCH1 resource is a HARQ-ACK2, and UCI3 carried by a PUCCH3 resource is CSI.

Alternatively, in another optional design, the first UCI and the second UCI may be at least one of a HARQ acknowledgement message, CSI, and an SR, and the third UCI may be a HARQ acknowledegment message. Refer to FIG. 7. UCI1 carried by the PUCCH1 resource is CSI, UCI2 carried by the PUCCH2 resource is CSI, and UCI3 carried by the PUCCH3 resource is a HARQ-ACK.

In another optional design, after performing step 402, the terminal device may determine, based on overlapping of the fourth PUCCH resource and the second PUCCH resource in time domain, whether to use the fourth PUCCH resource to transmit uplink control information and specific uplink control information to be transmitted. For example, the terminal device may transmit the uplink control information in one of the following cases.

Case 1: When the fourth PUCCH resource and the second PUCCH resource do not overlap at all in time domain, the terminal device transmits the first UCI and the third UCI by using the fourth PUCCH resource, and transmits the second UCI by using the second PUCCH resource.

Case 2: When the fourth PUCCH resource and the second PUCCH resource at least partially overlap in time domain, and the fourth PUCCH resource and the second PUCCH resource do not meet a fourth multiplexing condition, the terminal device transmits the first UCI and the third UCI by using the fourth PUCCH resource, and determines to stop using the second PUCCH resource to transmit the second UCI. For example, when the terminal device determines that a priority of the fourth PUCCH resource is higher than a priority of the second PUCCH resource, the terminal device transmits the first UCI and the third UCI by using the fourth PUCCH resource, and determines to stop using the second PUCCH resource to transmit the second UCI.

Alternatively, the terminal device transmits the second UCI by using the second PUCCH resource, and determines to stop using the fourth PUCCH resource to transmit the first UCI and the third UCI. For example, when determining that a priority of the fourth PUCCH resource is not higher than a priority of the second PUCCH resource, the terminal device transmits the second UCI by using the second PUCCH resource, and determines to stop using the fourth PUCCH resource to transmit the first UCI and the third UCI.

Alternatively, the terminal device determines a fifth PUCCH resource, where the fifth PUCCH resource is used to transmit the first UCI, the second UCI, and the third UCI, determines to stop using the second PUCCH resource to transmit the second UCI, and determines to stop using the fourth PUCCH resource to transmit the first UCI and the third UCI.

The fourth multiplexing condition may meet one or more of the following d1, d2, d3, and d4:
d1. At least one of the second UCI, the first UCI, and the third UCI includes a HARQ acknowledegment message, and a distance between an earliest start symbol of the second PUCCH resource and the fourth PUCCH resource and an end symbol of a PDSCH resource corresponding to the HARQ acknowledegment message is greater than or equal to a first threshold.
d2. None of the first UCI, the second UCI, and the third UCI includes a HARQ acknowledegment message.
d2. The first UCI, the second UCI, and the third UCI have a same priority.
d4. At least two of the first UCI, the second UCI, and the third UCI have different priorities, and time domain positions and transmission code rates of the fourth PUCCH resource, the second PUCCH resource, and the fifth PUCCH resource meet a preset relationship. The fifth PUCCH resource is used to carry the first UCI, the second UCI, and the third UCI (that is, if the first UCI, the second UCI, and the third UCI are multiplexed, the UE determines to use the fifth PUCCH resource to transmit the first UCI, the second UCI, and the third UCI).

Optionally, the preset relationship includes: When a priority of the first UCI or the third UCI is higher than that of the second UCI, an end symbol of the fifth PUCCH resource is not later than an end symbol of the fourth PUCCH resource; or an end symbol of the fifth PUCCH resource is later than an end symbol of the fourth PUCCH resource and an end symbol difference is less than or equal to a second threshold. Optionally, the preset relationship includes: When the priority of the first UCI or the third UCI is higher than that of the second UCI, a coding rate on the fifth PUCCH resource is not greater than a coding rate on the fourth PUCCH resource; or a coding rate on the fifth PUCCH resource is greater than a coding rate on the fourth PUCCH resource and a coding rate difference is less than or equal to a third threshold.

Case 3: When the fourth PUCCH resource and the second PUCCH resource at least partially overlap in time domain and the fourth PUCCH resource and the second PUCCH resource meet the fourth multiplexing condition, the terminal device determines a fifth PUCCH resource, where the fifth PUCCH resource is used to transmit the first UCI, the second UCI, and the third UCI.

Optionally, the fifth PUCCH resource is determined based on a total quantity of bits of the first UCI, the second UCI, and the third UCI. Optionally, when the first UCI, the second UCI, or the third UCI includes a HARQ acknowledegment message, the fifth PUCCH resource may be determined jointly based on the total quantity of bits of the first UCI, the second UCI, and the third UCI and second indication information. The second indication information is PUCCH resource indication information in the last piece of DCI in DCI corresponding to all HARQ-ACKs in the first UCI, the second UCI, and the third UCI. DCI corresponding to a HARQ-ACK is DCI used to schedule a PDSCH corresponding to the HARQ-ACK, and the last piece of DCI may be the last piece of DCI received by the UE.

For example, in this embodiment of this application, a scenario 1 shown in FIG. 6 and a scenario 2 shown in FIG. 7 are used as examples to describe the foregoing communication method.

### Scenario 1

As shown in FIG. 6, the UCI1 carried by the PUCCH1 resource is the HARQ-ACK1, the UCI2 carried by the PUCCH2 resource is the HARQ-ACK2, and the UCI3 carried by the PUCCH3 resource is the CSI. The start symbol of the PUCCH1 resource is earlier than the start symbol of the PUCCH2 resource, the PUCCH1 resource partially overlaps the PUCCH3 resource, and the PUCCH2 resource partially overlaps the PUCCH3 resource. Because a distance between a start symbol of the PUCCH3 resource and a PDSCH1 resource corresponding to the HARQ-ACK1 is greater than or equal to a first threshold T1, the terminal device determines that the PUCCH1 resource and the PUCCH3 resource meet the first multiplexing condition. Because a distance between the start symbol of the PUCCH3 resource and a PDSCH2 resource corresponding to the HARQ-ACK2 is less than a first threshold T1, the terminal device determines that the PUCCH2 resource and the PUCCH3 resource do not meet the second multiplexing condition. Values of the two first thresholds T1 in FIG. 6 may be the same or different.

For the scenario shown in FIG. 6, when the PUCCH1 resource and the PUCCH3 resource meet the first multiplexing condition, and the PUCCH2 resource and the PUCCH3 resource do not meet the second multiplexing condition, the terminal device determines a PUCCH4 resource. The PUCCH4 resource is used to transmit the HARQ-ACK1 and the CSI. After determining the PUCCH4 resource, the terminal device transmits uplink control information based on overlapping of the PUCCH4 resource and the PUCCH2 resource in time domain in any one of the following cases.

Case 1: The terminal device determines that the PUCCH4 resource and the PUCCH2 resource do not overlap at all in time domain. In this case, the terminal device performs UCI MUX on the UCI1 carried on the PUCCH1 resource and the UCI3 carried on the PUCCH3 resource. In other words, the terminal device sends the HARQ-ACK1 and the CSI by using the PUCCH4 resource, and sends the HARQ-ACK2 by using the PUCCH2 resource.

The PUCCH4 resource may be determined based on a total quantity of bits of the HARQ-ACK1 and the CSI. Optionally, the PUCCH4 resource may be determined based on a total quantity of bits of the HARQ-ACK1, the CSI, and the SR, and PUCCH resource indication information included in the last piece of DCI in DCI corresponding to the HARQ-ACK1. The DCI corresponding to the HARQ-ACK1 is DCI used to schedule a PDSCH corresponding to the HARQ-ACK1, and the last piece of DCI may be the last piece of DCI received by the UE.

Case 2: The terminal device determines that the PUCCH4 resource overlaps the PUCCH2 resource, and the PUCCH4 resource and the PUCCH2 resource meet the fourth multiplexing condition. In this case, the terminal device determines a PUCCH5 resource, and uses the PUCCH5 resource to carry the HARQ-ACK1, the HARQ-ACK2, and the CSI.

Optionally, the PUCCH5 resource may be determined based on a total quantity of bits of the HARQ-ACK1, the HARQ-ACK2, and the CSI. Optionally, the PUCCH5 resource may be determined based on the total quantity of bits of the HARQ-ACK1, the HARQ-ACK2, and the CSI, and PUCCH resource indication information included in the last piece of DCI in DCI corresponding to the HARQ-ACK1 and the HARQ-ACK2. The DCI corresponding to the HARQ-ACK1 and the HARQ-ACK2 is DCI used to schedule a PDSCH corresponding to the HARQ-ACK1 or the HARQ-ACK2, and the last piece of DCI may be the last piece of DCI received by the UE.

Case 3: The terminal device determines that the PUCCH4 resource overlaps the PUCCH2 resource, and the PUCCH4 resource and the PUCCH2 resource do not meet the fourth multiplexing condition. In this case, the terminal device may transmit uplink control information in one of the following manners a, b, and c. A specific transmission manner in the manners a, b, and c may be determined based on a protocol agreement and/or a specific scenario. This is not limited herein.
a. When the terminal device determines that at least one of priorities of the HARQ-ACK1 and the CSI carried by the PUCCH4 resource is higher than a priority of the HARQ-ACK2 carried by the PUCCH2 resource, the terminal device determines to stop using the PUCCH2 resource to send the HARQ-ACK2, and sends the HARQ-ACK1 and the CSI by using the PUCCH4 resource.
   Alternatively, when the terminal device determines that priorities of the HARQ-ACK1 and the CSI carried on the PUCCH4 resource are not higher than a priority of the HARQ-ACK2 carried on the PUCCH2 resource, the terminal device sends the HARQ-ACK2 only by using the PUCCH2 resource.
b. When the PUCCH1 resource and the PUCCH2 resource do not overlap, the terminal device performs rollback processing, that is, determines to stop using the PUCCH4 resource and determines to stop using the PUCCH3 resource, sends the HARQ-ACK2 on the PUCCH2 resource, and sends the HARQ-ACK1 on the PUCCH1 resource.
c. The terminal device determines to stop using the PUCCH4 resource, and determines the PUCCH5 resource. The terminal device sends the HARQ-ACK1, the HARQ-ACK1, and the CSI on the PUCCH5 resource. The PUCCH5 resource is determined based on the total quantity of bits of the HARQ-ACK1, the HARQ-ACK1, and the CSI.

It should be noted that the priority of the PUCCH resource may be related to a priority of UCI carried by the PUCCH resource, for example, is determined based on the priority of the UCI carried by the PUCCH resource. For example, one or more priority indexes are predefined in the protocol. A smaller index indicates a higher priority. In addition, for different types of UCI (such as a HARQ-ACK, CSI, and an SR) and specific transmission parameters, priority indexes corresponding to the UCI are predefined in the protocol, to identify priorities of different types of UCI or priorities of UCI of different transmission parameters but of a same type.

Optionally, for a HARQ-ACK, a priority index of the HARQ-ACK may be determined based on DCI corresponding to the HARQ-ACK. The DCI corresponding to the HARQ-ACK herein is DCI used to schedule a PDSCH corresponding to the HARQ-ACK. Specifically, the priority index of the HARQ-ACK may be determined based on one or more of a format of the DCI, an RNTI, or explicit indication information included in the DCI. For another example, for an SR, a priority index may be explicitly determined by using a higher-layer parameter in an SR configuration (configuration), or may be implicitly determined by using another parameter (for example, one or more of a periodicity, duration, and an associated logical channel) in the SR configuration. For another example, for CSI, a priority index may be explicitly determined by using a higher-layer parameter in a CSI report configuration (report configuration), or may be implicitly determined by using another parameter (for example, one or both of a periodicity and an associated CQI table) in the CSI report configuration.

In the foregoing technical solution, if some of a plurality of PUCCH resources meet a multiplexing condition, and some of the PUCCH resources do not meet a multiplexing condition, the terminal device first multiplexes UCI that meets the multiplexing condition. If a new PUCCH resource overlaps with a remaining PUCCH resource, whether the new PUCCH resource and the remaining PUCCH resource meet a multiplexing condition further needs to be determined. An advantage of this is that some PUCCH resources do not meet the multiplexing condition before, but may meet a multiplexing condition after successive multiplexing, and therefore a UCI loss can be avoided as much as possible.

### Scenario 2

For example, as shown in FIG. 7, the UCI1 carried by the PUCCH1 is CSI1, the UCI2 carried by the PUCCH2 is CSI2, and the PUCCH3 carries the HARQ-ACK. The start symbol of the PUCCH2 resource is earlier than the start symbol of the PUCCH1 resource, the PUCCH1 resource partially overlaps the PUCCH3 resource, and the PUCCH2 resource partially overlaps the PUCCH3 resource. Because a distance between the start symbol of the PUCCH2 resource and a PDSCH1 corresponding to the HARQ-ACK is less than a first threshold T1, the terminal device determines that the PUCCH2 resource and the PUCCH3 resource do not meet the second multiplexing condition. Because a distance between the start symbol of the PUCCH1 resource and the PDSCH1 corresponding to the HARQ-ACK is greater than or equal to a first threshold T1, the terminal device determines that the PUCCH1 resource and the PUCCH3 resource meet the first multiplexing condition. Values of the two first thresholds T1 in FIG. 7 may be the same or different. The value of the first threshold T1 in FIG. 6 may be the same as or different from the value of the first threshold T1 in FIG. 7.

For the scenario shown in FIG. 7, when the PUCCH1 resource and the PUCCH3 resource meet the first multiplexing condition, and the PUCCH2 resource and the PUCCH3 resource do not meet the second multiplexing condition, the terminal device determines a PUCCH4 resource. The PUCCH4 resource is used to transmit the HARQ-ACK and the CSI1. After determining the PUCCH4 resource, the terminal device transmits uplink control information in one of the foregoing three cases. Details are not described herein again.

It should be understood that the foregoing communication method may also be performed by the network device. For a specific execution process, refer to the foregoing descriptions. Details are not described herein again.

The embodiments of this application provide another communication method. The method may be performed by a terminal device, or may be performed by a network device. In the embodiments of this application, the terminal device in the following content may be the terminal device 106 shown in FIG. 1, and the network device in the following content may be the network device 102 shown in FIG. 1. It should be understood that in this application, steps performed by the network device may alternatively be specifically performed by a module or a component of the network device, for example, may be performed by a chip in the network device, and steps performed by the terminal device may alternatively be specifically performed by a module or a component of the terminal device, for example, may be performed by a chip in the terminal device.

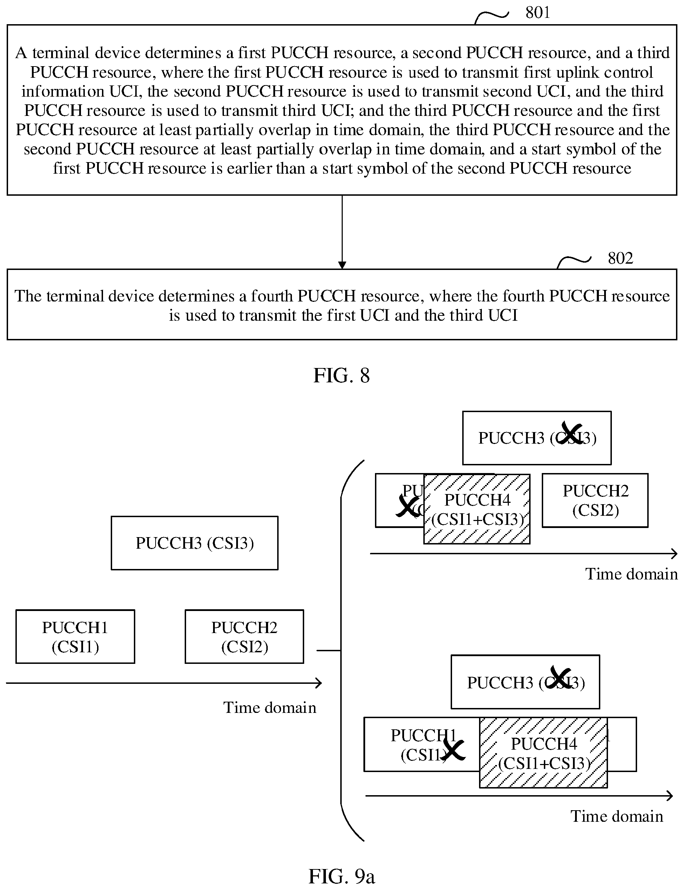

FIG. 8 shows another communication method according to an embodiment of this application. The method is performed by a terminal device. The method includes the following steps.

Step 801. A terminal device determines a first PUCCH resource, a second PUCCH resource, and a third PUCCH resource.

The first PUCCH resource is used to transmit first UCI, the second PUCCH resource is used to transmit second UCI, and the third PUCCH resource is used to transmit third UCI; and the third PUCCH resource and the first PUCCH resource at least partially overlap in time domain, the third PUCCH resource and the second PUCCH resource at least partially overlap in time domain, and a start symbol of the first PUCCH resource is earlier than a start symbol of the second PUCCH resource.

Step 802. The terminal device determines a fourth PUCCH resource, where the fourth PUCCH resource is used to transmit the first UCI and the third UCI.

Optionally, the fourth PUCCH resource is determined based on a total quantity of bits of the first UCI and the third UCI. Optionally, when the first UCI and/or the second UCI each include/includes a HARQ acknowledegment message, the fourth PUCCH resource may be determined jointly based on the total quantity of bits of the first UCI and the third UCI and first indication information. The first indication information is PUCCH resource indication information in the last piece of downlink control information (DCI) in DCI corresponding to all HARQ acknowledegment messages in the first UCI and the third UCI. DCI corresponding to a HARQ acknowledegment message is DCI used to schedule a PDSCH corresponding to the HARQ acknowledegment message, and the last piece of DCI may be the last piece of DCI received by the UE.

In the foregoing technical solution, if the terminal device determines that the start symbol of the first PUCCH resource is earlier than the start symbol of the second PUCCH resource, and the first PUCCH resource overlaps the third PUCCH resource in time domain, the terminal device determines a new PUCCH resource, namely, the fourth PUCCH resource. The terminal device may send the first UCI and the third UCI by using the fourth PUCCH resource, and determine to stop using the first PUCCH resource and the third PUCCH resource. In other words, the terminal device sequentially performs, based on a time domain resource sequence, uplink multiplexing on resources that overlap in time domain. In this case, a multiplexing condition may not be considered.

Specifically, refer to FIG. 9a. A PUCCH1 resource is used to transmit UCI1, a PUCCH2 resource is used to transmit UCI2, and a PUCCH3 resource is used to transmit UCI3. The PUCCH3 resource and the PUCCH1 resource at least partially overlap in time domain, the PUCCH3 resource and the PUCCH2 resource at least partially overlap in time domain, and a start symbol of the PUCCH1 resource is earlier than a start symbol of the PUCCH2 resource. The terminal device determines a PUCCH4 resource, where the PUCCH4 resource is used to transmit the UCI1 and the UCI3. The PUCCH4 resource may overlap with the PUCCH2 resource, or may not overlap with the PUCCH2 resource.

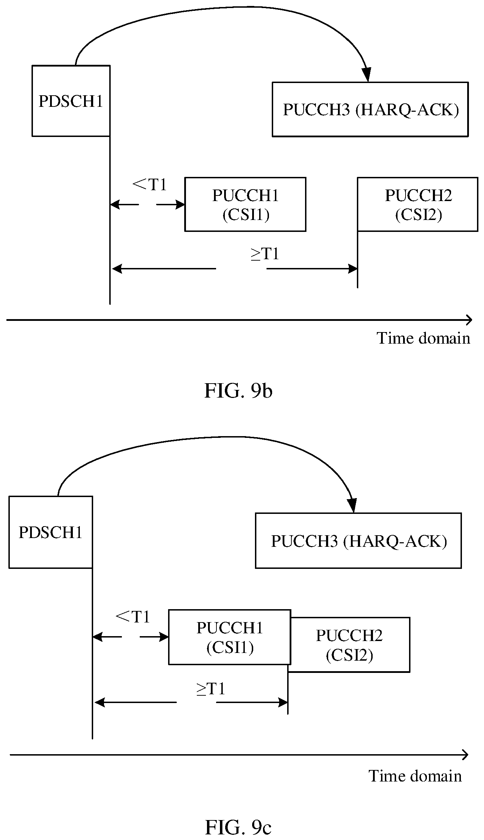

In an optional design, the first PUCCH resource, the second PUCCH resource, and the third PUCCH resource in step 801 may further meet the following condition: The first PUCCH resource and the third PUCCH resource do not meet a first multiplexing condition. The first multiplexing condition is described above, and is not described herein again. Refer to FIG. 9b. The PUCCH1 resource carries CSI1, the PUCCH2 resource carries CSI2, and the PUCCH3 resource carries a HARQ-ACK. A distance between the start symbol of the PUCCH1 resource and an end symbol of a PDSCH1 corresponding to the HARQ-ACK is less than a first threshold T1. Therefore, the PUCCH1 resource and the PUCCH3 resource do not meet the first multiplexing condition.

In another optional design, the first PUCCH resource, the second PUCCH resource, and the third PUCCH resource in step 801 may further meet the following condition: The first PUCCH resource and the second PUCCH resource do not overlap at all in time domain, as shown in FIG. 9b. Alternatively, the first PUCCH resource, the second PUCCH resource, and the third PUCCH resource in step 801 may meet the following condition: The first PUCCH resource and the second PUCCH resource at least partially overlap in time domain, and the start symbol of the second PUCCH resource is later than a start symbol of the third PUCCH resource. As shown in FIG. 9c, the start symbol of the PUCCH2 resource is later than a start symbol of the PUCCH3.

In another optional design, after performing step 802, the terminal device may determine, based on overlapping of the fourth PUCCH resource and the second PUCCH resource in time domain, whether to use the fourth PUCCH resource to transmit uplink control information and specific uplink control information to be transmitted. For example, the terminal device may transmit the uplink control information in one of the following cases.

Case 1: The fourth PUCCH resource and the second PUCCH resource do not overlap at all in time domain. In this case, the terminal device transmits the first UCI and the third UCI by using the fourth PUCCH resource, and transmits the second UCI by using the second PUCCH resource.

Case 2: The fourth PUCCH resource and the second PUCCH resource at least partially overlap in time domain. In this case, the terminal device determines a fifth PUCCH resource, where the fifth PUCCH resource is used to transmit the first UCI, the second UCI, and the third UCI.

Optionally, the fifth PUCCH resource is determined based on a total quantity of bits of the first UCI, the second UCI, and the third UCI. Optionally, when the first UCI, the second UCI, and the third UCI include a HARQ acknowledegment message, the fifth PUCCH resource may be determined jointly based on the total quantity of bits of the first UCI, the second UCI, and the third UCI and first indication information. The first indication information is PUCCH resource indication information in the last piece of downlink control information (DCI) in DCI corresponding to all HARQ acknowledegment messages in the first UCI, the second UCI, and the third UCI.

For example, in this embodiment of this application, a scenario 3 shown in FIG. 9a is used as an example to describe the foregoing communication method.

### Scenario 3

As shown in FIG. 9b, the UCI1 carried by the PUCCH1 resource is the CSI1, the UCI2 carried by the PUCCH2 resource is the CSI2, and the UCI3 carried by the PUCCH3 resource is the HARQ-ACK. The start symbol of the PUCCH1 resource is earlier than the start symbol of the PUCCH2 resource, the PUCCH1 resource partially overlaps the PUCCH3 resource, and the PUCCH2 resource partially overlaps the PUCCH3 resource. Because a distance between the start symbol of the PUCCH3 resource and a PDSCH1 resource corresponding to a HARQ-ACK1 is less than a first threshold T1, the terminal device determines that the PUCCH1 resource and the PUCCH3 resource do not meet a multiplexing condition. Because a distance between the start symbol of the PUCCH3 resource and a PDSCH2 resource corresponding to a HARQ-ACK2 is greater than or equal to a first threshold T1, the terminal device determines that the PUCCH2 resource and the PUCCH3 resource meet a multiplexing condition.

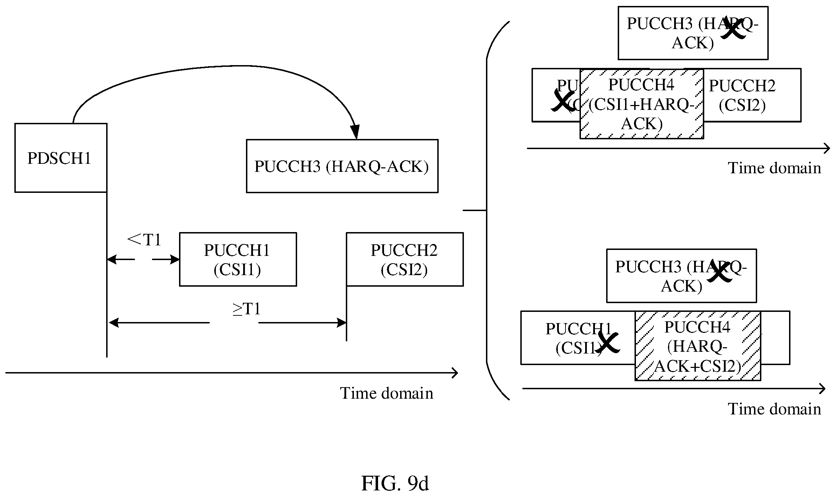

For the scenario shown in FIG. 9b, when the PUCCH1 resource overlaps the PUCCH3 resource in time domain, the terminal device determines a PUCCH4 resource, and the PUCCH4 resource is used to transmit the HARQ-ACK1 and the CSI. After determining the PUCCH4 resource, the terminal device transmits uplink control information in one of the following cases. Refer to FIG. 9d.

Case 1: The terminal device determines that the PUCCH4 resource and the PUCCH2 resource do not overlap at all in time domain, and the terminal device performs UCI MUX on the UCI1 carried on the PUCCH1 resource and the UCI3 carried on the PUCCH3 resource. That is, the terminal device sends the HARQ-ACK and the CSI1 by using the PUCCH4 resource, and sends the CSI2 by using the PUCCH2 resource.

The PUCCH4 resource may be determined based on a total quantity of bits of the UCI1 and the UCI2. Optionally, the PUCCH4 may be determined based on PUCCH resource indication information included in the last piece of DCI in DCI corresponding to the HARQ-ACK.

Case 2: When the terminal device determines that the PUCCH4 resource overlaps the PUCCH2 resource, the terminal device determines a PUCCH5 resource, and uses the PUCCH5 resource to carry the HARQ-ACK, the CSI1, and the CSI2.

Optionally, the PUCCH5 resource may be determined based on a total quantity of bits of the HARQ-ACK, the CSI1, and the CSI2. Optionally, the PUCCH5 resource may be determined based on PUCCH resource indication information included in the last piece of DCI in DCI corresponding to the HARQ-ACK. The DCI corresponding to the HARQ-ACK is DCI used to schedule a PDSCH corresponding to the HARQ-ACK, and the last piece of DCI may be the last piece of DCI received by the UE.

It can be learned that a difference between the communication method provided in this embodiment of this application and the first communication method lies in that the terminal device does not need to determine whether PUCCH resources meet a multiplexing condition, but performs uplink multiplexing strictly based on a time sequence of PUCCH resources. That is, a PUCCH resource earliest in time domain is always preferentially processed. If the terminal device finds that a PUCCH resource overlaps the PUCCH resource in time domain, the terminal device determines a new PUCCH resource, and then continues to process PUCCH resources in a time domain sequence.

It should be understood that the foregoing communication method may also be performed by the network device. For a specific execution process, refer to the foregoing descriptions. Details are not described herein again.

The embodiments of this application provide another communication method. The method may be performed by a terminal device, or may be performed by a network device. In the embodiments of this application, the terminal device in the following content may be the terminal device 106 shown in FIG. 1, and the network device in the following content may be the network device 102 shown in FIG. 1. It should be understood that in this application, steps performed by the network device may alternatively be specifically performed by a module or a component of the network device, for example, may be performed by a chip in the network device, and steps performed by the terminal device may alternatively be specifically performed by a module or a component of the terminal device, for example, may be performed by a chip in the terminal device.

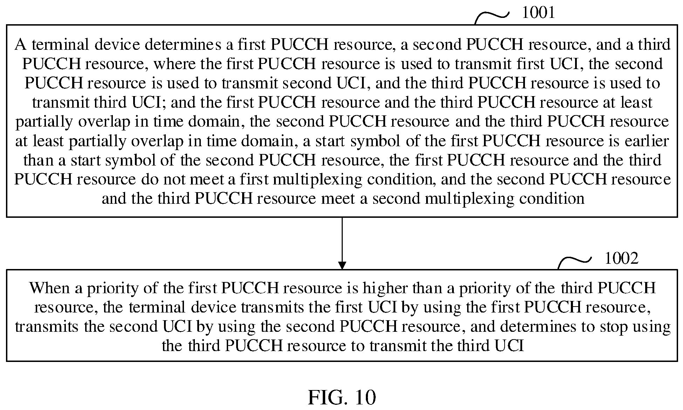

FIG. 10 shows another communication method according to an embodiment of this application. The method is performed by a terminal device. The method includes the following steps.

Step 1001. A terminal device determines a first PUCCH resource, a second PUCCH resource, and a third PUCCH resource.

The first PUCCH resource is used to transmit first UCI, the second PUCCH resource is used to transmit second UCI, and the third PUCCH resource is used to transmit third UCI; and the first PUCCH resource and the third PUCCH resource at least partially overlap in time domain, the second PUCCH resource and the third PUCCH resource at least partially overlap in time domain, a start symbol of the first PUCCH resource is earlier than a start symbol of the second PUCCH resource, the first PUCCH resource and the third PUCCH resource do not meet a first multiplexing condition, and the second PUCCH resource and the third PUCCH resource meet a second multiplexing condition.

The first multiplexing condition may meet one or more of the following a1, a2, a3, and a4:
a1. The first UCI and/or the third UCI each include/includes a HARQ acknowledegment message, and a distance between an earliest start symbol of the first PUCCH resource and the third PUCCH resource and an end symbol of a PDSCH resource corresponding to the HARQ acknowledegment message is greater than or equal to a first threshold.
a2. Neither the first UCI nor the third UCI includes a HARQ acknowledegment message.
a3. The first UCI and the third UCI have a same priority.
a4. The first UCI and the third UCI have different priorities, and time domain positions and/or transmission code rates of the first PUCCH resource, the third PUCCH resource, and a fourth PUCCH resource meet a preset relationship, where the fourth PUCCH resource is used to carry the first UCI and the third UCI (that is, if the first UCI and the third UCI are multiplexed, the UE determines to use the fourth PUCCH resource to transmit the first UCI and the third UCI).

Optionally, the preset relationship includes: When a priority of the first UCI is higher than that of the third UCI, an end symbol of the fourth PUCCH resource is not later than an end symbol of the first PUCCH resource; or an end symbol of the fourth PUCCH resource is later than an end symbol of the first PUCCH resource and an end symbol difference is less than or equal to a second threshold. Optionally, the preset relationship includes: When the priority of the first UCI is higher than that of the third UCI, a coding rate on the fourth PUCCH resource is not greater than a coding rate on the first PUCCH resource; or a coding rate on the fourth PUCCH resource is greater than a coding rate on the first PUCCH resource and a coding rate difference is less than or equal to a third threshold.

In addition, the second multiplexing condition may meet any one or more of the following b1, b2, b3, and b4:
b1. The second UCI and/or the third UCI each include/includes a HARQ acknowledegment message, and a distance between an earliest start symbol of the second PUCCH resource and the third PUCCH resource and an end symbol of a PDSCH resource corresponding to the HARQ acknowledegment message is greater than or equal to a first threshold.
b2. Neither the second UCI nor the third UCI includes a HARQ acknowledegment message.
b3. The second UCI and the third UCI have a same priority.
b4. The second UCI and the third UCI have different priorities, and time domain positions and/or transmission code rates of the second PUCCH resource, the third PUCCH resource, and a sixth PUCCH resource meet a preset relationship, where the sixth PUCCH resource is used to carry the second UCI and the third UCI (that is, if the second UCI and the third UCI are multiplexed, the UE determines to use the sixth PUCCH resource to transmit the second UCI and the third UCI).

Optionally, the preset relationship includes: When a priority of the second UCI is higher than that of the third UCI, an end symbol of the sixth PUCCH resource is not later than an end symbol of the second PUCCH resource; or an end symbol of the sixth PUCCH resource is later than an end symbol of the second PUCCH resource and an end symbol difference is less than or equal to a second threshold. Optionally, the preset relationship includes: When the priority of the second UCI is higher than that of the third UCI, a coding rate on the sixth PUCCH resource is not greater than a coding rate on the second PUCCH resource; or a coding rate on the sixth PUCCH resource is greater than a coding rate on the second PUCCH resource and a coding rate difference is less than or equal to a third threshold.

In an optional design, the first PUCCH resource and the second PUCCH resource do not overlap at all in time domain; or the first PUCCH resource and the second PUCCH resource at least partially overlap in time domain, the first PUCCH resource and the second PUCCH resource do not meet a third multiplexing condition, and the start symbol of the second PUCCH resource is later than a start symbol of the third PUCCH resource.

The third multiplexing condition may meet any one or more of the following c1, c2, c3, and c4:
c1. The first UCI and/or the second UCI each include/includes a HARQ acknowledegment message, and a distance between an earliest start symbol of the first PUCCH resource and the second PUCCH resource and an end symbol of a PDSCH resource corresponding to the HARQ acknowledegment message is greater than or equal to a first threshold.
c2. Neither the first UCI nor the second UCI includes a HARQ acknowledegment message.
c3. The first UCI and the second UCI have a same priority.
c4. The first UCI and the second UCI have different priorities, and time domain positions and transmission code rates of the first PUCCH resource, the second PUCCH resource, and a seventh PUCCH resource meet a preset relationship, where the seventh PUCCH resource is used to carry the first UCI and the second UCI (that is, if the first UCI and the second UCI are multiplexed, the UE determines to use the seventh PUCCH resource to transmit the first UCI and the second UCI).

Optionally, the preset relationship includes: When a priority of the first UCI is higher than that of the second UCI, an end symbol of the seventh PUCCH resource is not later than an end symbol of the first PUCCH resource; or an end symbol of the seventh PUCCH resource is later than an end symbol of the first PUCCH resource and an end symbol difference is less than or equal to a second threshold. Optionally, the preset relationship includes: When the priority of the first UCI is higher than that of the second UCI, a coding rate on the seventh PUCCH resource is not greater than a coding rate on the first PUCCH resource; or a coding rate on the seventh PUCCH resource is greater than a coding rate on the first PUCCH resource and a coding rate difference is less than or equal to a third threshold.

In an optional design, the first UCI and the second UCI may include at least one of a HARQ acknowledegment message, CSI, and an SR (where types of the first UCI and the second UCI may be different or the same), and the third UCI may be a HARQ acknowledegment message. Refer to FIG. 9b. The UCI1 carried by the PUCCH1 resource is CSI, the UCI2 carried by the PUCCH2 resource is CSI, and the UCI3 carried by the PUCCH3 resource is a HARQ-ACK.

Step 1002. When a priority of the first PUCCH resource is higher than a priority of the third PUCCH resource, the terminal device transmits the first UCI by using the first PUCCH resource, transmits the second UCI by using the second PUCCH resource, and determines to stop using the third PUCCH resource to transmit the third UCI.

In the foregoing technical solution, when the terminal device determines that the start symbol of the first PUCCH resource is earlier than the start symbol of the second PUCCH resource, and the first PUCCH resource and the third PUCCH resource overlap in time domain but do not meet the first multiplexing condition, the terminal device chooses, based on the priorities of the first PUCCH resource and the third PUCCH resource, to transmit UCI by using the PUCCH resource with a higher priority.

In an optional design, the first PUCCH resource, the second PUCCH resource, and the third PUCCH resource in step 1001 may further meet the following condition: The second UCI includes a HARQ acknowledegment message.

Optionally, when the priority of the first PUCCH resource is equal to the priority of the third PUCCH resource, or when the priority of the first PUCCH resource is lower than the priority of the third PUCCH resource, the terminal device determines to stop using the first PUCCH resource to transmit the first UCI, and determines the fourth PUCCH resource, where the fourth PUCCH resource is used to transmit the second UCI and the third UCI. Optionally, the fourth PUCCH resource is determined based on a total quantity of bits of the second UCI and the third UCI. Optionally, when the first UCI and/or the second UCI each include/includes a HARQ acknowledegment message, the fourth PUCCH resource may be determined jointly based on the total quantity of bits of the second UCI and the third UCI and first indication information. The first indication information is PUCCH resource indication information in the last piece of DCI in DCI corresponding to all HARQ acknowledegment messages in the second UCI and the third UCI. DCI corresponding to a HARQ acknowledegment message is DCI used to schedule a PDSCH corresponding to the HARQ acknowledegment message, and the last piece of DCI is the last piece of DCI received by the UE.

In another optional design, when the second UCI does not include a HARQ-ACK, the terminal device determines a fifth PUCCH resource used to transmit the second UCI and the third UCI.

Optionally, the fifth PUCCH resource is determined based on a total quantity of bits of the second UCI and the third UCI. Optionally, when the second UCI and/or the third UCI each include/includes a HARQ acknowledegment message, the fifth PUCCH resource may be determined jointly based on the total quantity of bits of the second UCI and the third UCI and first indication information. The first indication information is PUCCH resource indication information in the last piece of DCI in DCI corresponding to all HARQ acknowledegment messages in the second UCI or the third UCI. DCI corresponding to the HARQ acknowledegment message is DCI used to schedule a PDSCH corresponding to the HARQ acknowledegment message, and the last piece of DCI is the last piece of DCI received by the UE.

Optionally, when the fifth PUCCH resource and the first PUCCH resource do not overlap at all in time domain, the terminal device transmits the second UCI and the third UCI by using the fifth PUCCH resource, and transmits the first UCI by using the first PUCCH resource.

Optionally, when the fifth PUCCH resource and the first PUCCH resource overlap in time domain, and the fifth PUCCH resource and the first PUCCH resource meet a fifth multiplexing condition, the terminal device determines a sixth PUCCH resource. The sixth PUCCH resource is used to transmit the first UCI, the second UCI, and the third UCI. Optionally, the sixth PUCCH resource is determined based on a total quantity of bits of the first UCI, the second UCI, and the third UCI. Optionally, when at least one of the first UCI, the second UCI, and the third UCI includes a HARQ acknowledegment message, the fifth PUCCH resource may be determined jointly based on a total quantity of bits of the first UCI and the third UCI and indication information. The indication information is PUCCH resource indication information in the last piece of DCI in DCI corresponding to all HARQ acknowledegment messages in at least one of the first UCI, the second UCI, and the third UCI. DCI corresponding to the HARQ acknowledegment message is DCI used to schedule a PDSCH corresponding to the HARQ acknowledegment message, and the last piece of DCI is the last piece of DCI received by the UE.

The fifth multiplexing condition may meet any one or more of the following e1, e2, e3, and e4:
e 1. At least one of the first UCI, the second UCI, and the third UCI includes a HARQ acknowledegment message, and a distance between an earliest start symbol of the fifth PUCCH resource and the second PUCCH resource and an end symbol of a PDSCH resource corresponding to the HARQ acknowledegment message is greater than or equal to a first threshold.
e2. None of the first UCI, the second UCI, and the third UCI includes a HARQ acknowledegment message.
e3. The first UCI, the second UCI, and the third UCI have a same priority.
e4. At least two of the first UCI, the second UCI, and the third UCI have different priorities, and time domain positions and transmission code rates of the fifth PUCCH resource, the second PUCCH resource, and an eighth PUCCH resource used to carry the first UCI, the second UCI, and the third UCI meet a preset relationship. The eighth PUCCH resource is used to transmit the first UCI, second UCI, and third UCI (that is, if the first UCI, the second UCI, and the third UCI are multiplexed, the UE determines to use the eighth PUCCH resource to transmit the first UCI, the second UCI, and the third UCI).

Optionally, the preset relationship includes: When a priority of the first UCI or the third UCI is higher than that of the second UCI, an end symbol of the eighth PUCCH resource is not later than an end symbol of the fifth PUCCH resource; or an end symbol of the eighth PUCCH resource is later than an end symbol of the fifth PUCCH resource and an end symbol difference is less than or equal to a second threshold. Optionally, the preset relationship includes: When the priority of the first UCI or the third UCI is higher than that of the second UCI, a coding rate on the eighth PUCCH resource is not greater than a coding rate on the fifth PUCCH resource; or a coding rate on the eighth PUCCH resource is greater than a coding rate on the fifth PUCCH resource and a coding rate difference is less than or equal to a third threshold.

Optionally, when the fifth PUCCH resource and the first PUCCH resource overlap in time domain, the fifth PUCCH resource and the first PUCCH resource do not meet the fifth multiplexing condition, and when a priority of the fifth PUCCH resource is higher than the priority of the first PUCCH resource, the second UCI and the third UCI are transmitted by using the fifth PUCCH resource, and using the first PUCCH resource to transmit the first UCI is determined to be stopped. When the priority of the fifth PUCCH resource is not higher than the priority of the first PUCCH resource, using the fifth PUCCH resource to transmit the second UCI and the third UCI is stopped, and the first UCI is transmitted by using the first PUCCH resource.

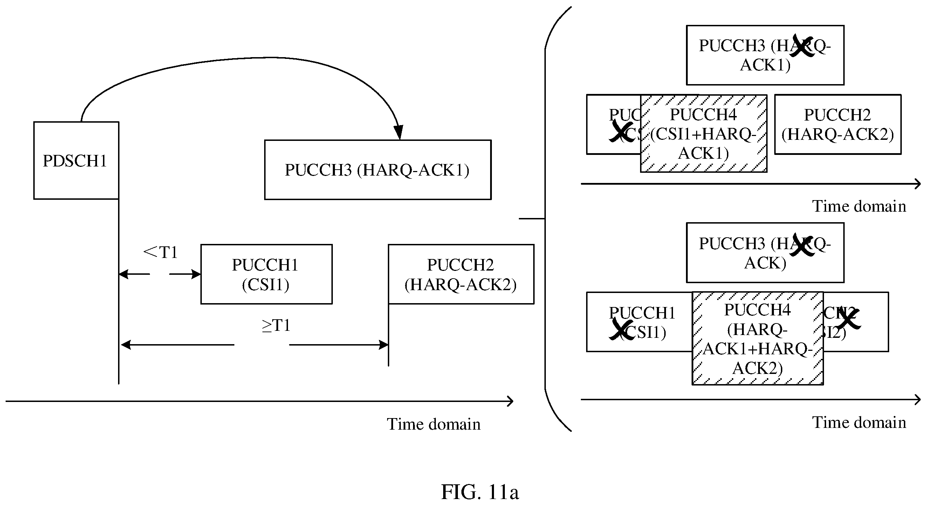

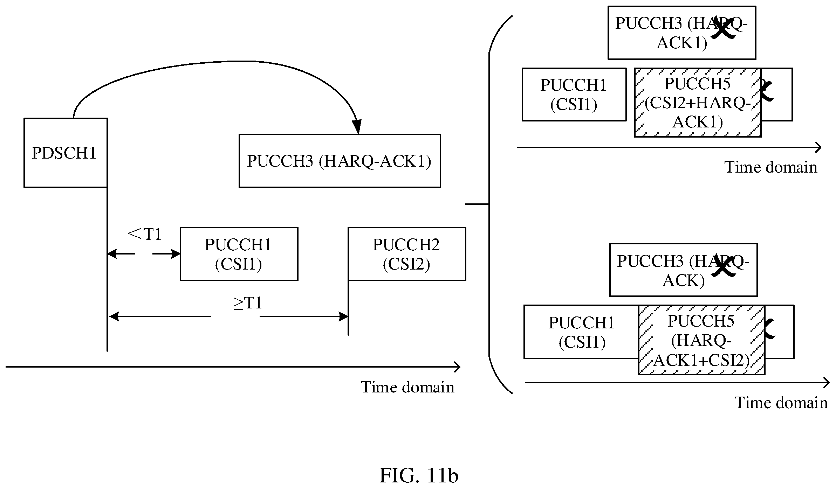

For example, in this embodiment of this application, a scenario 4 shown in FIG. 11a and a scenario 5 shown in FIG. 11b are used to systematically describe the foregoing communication method.

### Scenario 4

As shown in FIG. 11a, the UCI1 carried by the PUCCH1 is the CSI1, the UCI2 carried by the PUCCH2 is a HARQ-ACK2, and the UCI3 carried by the PUCCH3 is the HARQ-ACK1. The start symbol of the PUCCH1 resource is earlier than the start symbol of the PUCCH2 resource, the PUCCH1 resource partially overlaps the PUCCH3 resource, and the PUCCH2 resource partially overlaps the PUCCH3 resource. Because a distance between the start symbol of the PUCCH1 resource and a PDSCH1 corresponding to the HARQ-ACK1 is less than a first threshold T1, the terminal device determines that the PUCCH1 resource and the PUCCH3 resource do not meet the first multiplexing condition. Because a distance between the start symbol of the PUCCH2 resource and the PDSCH1 corresponding to the HARQ-ACK1 is greater than or equal to a first threshold T1, the terminal device determines that the PUCCH2 resource and the PUCCH3 resource meet the first multiplexing condition.

For the scenario shown in FIG. 11a, in a case 1, when a priority of the PUCCH1 resource is higher than a priority of the PUCCH3 resource in time domain, the terminal device determines to stop using the PUCCH3 resource to send the HARQ-ACK1, and the terminal device sends the CSI1 by using the PUCCH1 resource.

In a case 2, when a priority of the PUCCH1 resource is equal to a priority of the PUCCH3 resource, or a priority of the PUCCH1 resource is less than a priority of the PUCCH3 resource, the terminal device determines a PUCCH4 resource. The PUCCH4 resource is used to transmit the HARQ-ACK2 and the HARQ-ACK1, and the PUCCH4 resource may be determined based on a total quantity of bits of the HARQ-ACK1 and the HARQ-ACK2. Optionally, the PUCCH4 resource may be determined based on PUCCH resource indication information included in the last piece of DCI in DCI corresponding to the HARQ-ACK1 and the HARQ-ACK2.

### Scenario 5

As shown in FIG. 11b, the UCI1 carried by the PUCCH1 is the CSI1, the UCI2 carried by the PUCCH2 is the CSI2, and the UCI3 carried by the PUCCH3 is the HARQ-ACK1. The start symbol of the PUCCH1 resource is earlier than the start symbol of the PUCCH2 resource, the PUCCH1 resource partially overlaps the PUCCH3 resource, and the PUCCH2 resource partially overlaps the PUCCH3 resource. Because a distance between the start symbol of the PUCCH1 resource and a PDSCH1 corresponding to the HARQ-ACK1 is less than a first threshold T1, the terminal device determines that the PUCCH1 resource and the PUCCH3 resource do not meet the first multiplexing condition. Because a distance between the start symbol of the PUCCH2 resource and the PDSCH1 corresponding to the HARQ-ACK1 is greater than or equal to a first threshold T1, the terminal device determines that the PUCCH2 resource and the PUCCH3 resource meet the first multiplexing condition.

For the scenario shown in FIG. 11b, because the PUCCH2 resource is configured by a higher layer, the terminal device knows a time domain position of the PUCCH2 resource in a process of sending the PUCCH1 resource. Therefore, the terminal device determines that the PUCCH5 resource is used to transmit the second UCI and the third UCI.

Optionally, when the PUCCH5 resource and the PUCCH1 resource do not overlap at all in time domain, the terminal device transmits the CSI2 and the HARQ-ACK1 by using the PUCCH5 resource, and transmits the UCI1 by using the PUCCH1 resource.

Optionally, when the PUCCH5 resource and the PUCCH1 resource overlap in time domain, and the PUCCH5 resource and the PUCCH1 resource meet the fifth multiplexing condition, the terminal device determines a PUCCH resource 6. The PUCCH6 resource is used to transmit the CSI1, the CSI2, and the HARQ-ACK1.

Optionally, when the PUCCH5 resource and the PUCCH1 resource overlap in time domain, and the PUCCH5 resource and the PUCCH1 resource do not meet the fifth multiplexing condition, when a priority of the PUCCH5 resource is higher than the priority of the PUCCH1 resource, the CSI2 and the HARQ-ACK1 are transmitted by using the PUCCH5 resource, and using the PUCCH1 resource to transmit the CSI1 is determined to be stopped. When the priority of the PUCCH5 resource is not higher than the priority of the PUCCH1 resource, using the PUCCH5 resource to transmit the CSI2 and the HARQ-ACK1 is stopped, and the UCI1 is transmitted by using the PUCCH1 resource.

In this embodiment, in one case, if the terminal device does not know a time domain position of another PUCCH resource, the terminal device not only needs to determine whether PUCCH resources that overlap in time domain meet a multiplexing condition, but also performs uplink multiplexing strictly in a time domain sequence. For example, if the terminal device finds that a PUCCH resource and a PUCCH resource that is earliest in time domain at least partially overlap in time domain and do not meet a multiplexing condition, the terminal device chooses to send uplink control information by using a PUCCH resource with a higher priority. In another case, if the terminal device has known a time domain position of another PUCCH resource, and some PUCCH resources overlap and meet a multiplexing condition, the terminal device may first perform uplink multiplexing on UCI carried on the some PUCCH resources that meet the multiplexing condition.

It should be understood that the foregoing communication method may also be performed by the network device. For a specific execution process, refer to the foregoing descriptions. Details are not described herein again.

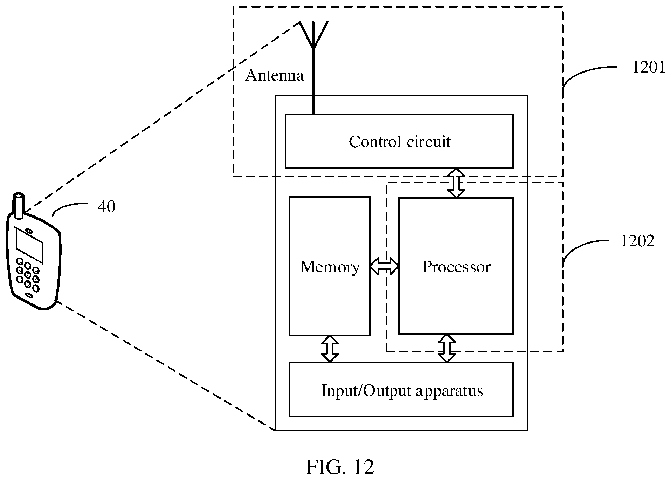

The foregoing describes in detail the communication methods in the embodiments of this application with reference to FIG. 6 to FIG. 11b. The following describes in detail a communication apparatus in the embodiments of this application with reference to FIG. 12 to FIG. 14.

FIG. 12 is a schematic diagram of a structure of a terminal device according to an embodiment of this application. The terminal device is used in the system shown in FIG. 1, and performs functions of the terminal device in the foregoing method embodiments. For ease of description, FIG. 12 shows only main components of the terminal device. As shown in FIG. 12, the terminal device 40 includes a processor, a memory, a control circuit, an antenna, and an input/output apparatus. The processor is mainly configured to process a communication protocol and communication data, control the entire terminal device, execute a software program, and process data of the software program, for example, configured to support the terminal device in performing the actions described in the foregoing method embodiments, for example, determining a fourth PUCCH resource and transmitting the uplink control information by using a PUCCH resource. The memory is mainly configured to store a software program and data, for example, store a correspondence that is between indication information and combination information, described in the foregoing embodiments. The control circuit is mainly configured to: perform conversion between a baseband signal and a radio frequency signal, and process the radio frequency signal. A combination of the control circuit and the antenna may also be referred to as a transceiver that is mainly configured to transmit and receive a radio frequency signal in a form of an electromagnetic wave. The input/output apparatus, such as a touchscreen, a display, or a keyboard, is mainly configured to: receive data entered by a user and output data to the user.

After the terminal device is powered on, the processor may read the software program in a storage unit, explain and execute instructions of the software program, and process the data of the software program. When data needs to be sent in a wireless manner, after the processor performs baseband processing on the to-be-sent data, the processor outputs a baseband signal to the radio frequency circuit. After performing radio frequency processing on the baseband signal, the radio frequency circuit sends a radio frequency signal through an antenna in a form of an electromagnetic wave. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 12 shows only one memory and only one processor. In an actual terminal device, there may be a plurality of processors and a plurality of memories. The memory may also be referred to as a storage medium, a storage device, or the like. This is not limited in this embodiment of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor in FIG. 12. A person skilled in the art may understand that the baseband processor and the central processing unit each may be an independent processor, and are interconnected by using a technology such as a bus. A person skilled in the art can understand that the terminal device may include a plurality of baseband processors to adapt to different network standards, the terminal device may include a plurality of central processing units to enhance a processing capability of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and communication data may be embedded into the processor, or may be stored in the storage unit in a form of a software program, so that the processor executes the software program to implement a baseband processing function.

In this embodiment of this application, the antenna and the control circuit that have receiving and sending functions may be considered as a transceiver unit 1201 of the terminal device 40, for example, to support the terminal device in receiving DCI information. The processor having a processing function is considered as a processing unit 1202 of the terminal device 40. As shown in FIG. 12, the terminal device 40 includes the transceiver unit 1201 and the processing unit 1202. The transceiver unit may also be referred to as a transceiver, a transceiver machine, a transceiver apparatus, or the like. Optionally, a device configured to implement the receiving function in the transceiver unit 1201 may be considered as a receiving unit, and a device configured to implement the sending function in the transceiver unit 1201 may be considered as a sending unit. In other words, the transceiver unit 1201 includes the receiving unit and the sending unit. The receiving unit may also be referred to as a receiver, an input port, a receiver circuit, or the like. The sending unit may be referred to as a transmitter, a transmitter machine, a transmitter circuit, or the like.

The processor 1202 may be configured to execute instructions stored in the memory, to control the transceiver unit 1201 to receive a signal and/or send a signal, to complete a function of the terminal device in the foregoing method embodiments. In an implementation, it may be considered that the function of the transceiver unit 1201 is implemented by using a transceiver circuit or a transceiver-dedicated chip.

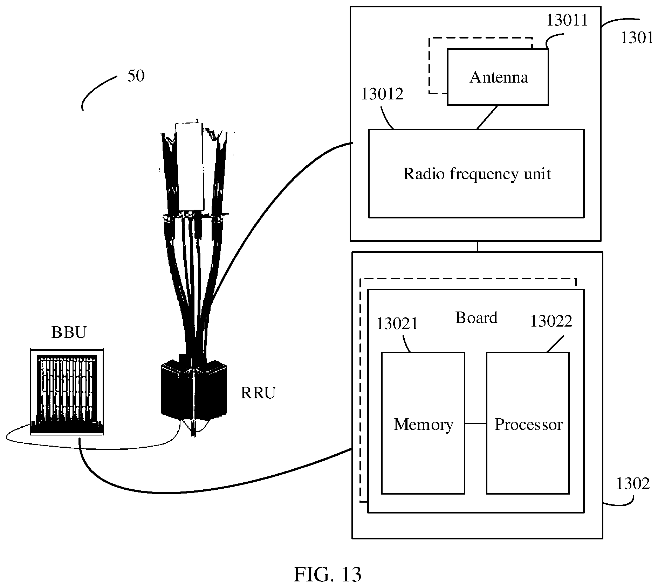

FIG. 13 is a schematic diagram of a structure of a network device according to an embodiment of this application, for example, may be a schematic diagram of a structure of a base station. As shown in FIG. 13, the base station may be applied to the system shown in FIG. 1, to perform a function of the network device in the foregoing method embodiments. The base station 50 may include one or more radio frequency units, such as a remote radio unit (remote radio unit, RRU) 1301 and one or more baseband units (baseband units, BBUs) (which may also be referred to as digital units (digital units, DUs)) 1302. The RRU 1301 may be referred to as a transceiver unit, a transceiver, a transceiver circuit, a transceiver machine, or the like, and may include at least one antenna 13011 and a radio frequency unit 13012. The RRU 1301 is mainly configured to send and receive a radio frequency signal, and perform conversion between a radio frequency signal and a baseband signal. For example, the RRU 1301 is configured to send the signaling message in the foregoing embodiments to a terminal device. The BBU 1302 is mainly configured to perform baseband processing, control the base station, and so on. The RRU 1301 and the BBU 1302 may be physically disposed together, or may be physically disposed separately, that is, a distributed base station.

The BBU 1302 is a control center of the base station, may also be referred to as a processing unit, and is mainly configured to implement a baseband processing function, for example, channel coding, multiplexing, modulation, and spectrum spreading. For example, the BBU (processing unit) 1302 may be configured to control the base station to perform an operation procedure related to the network device in the foregoing method embodiments.

In an example, the BBU 1302 may include one or more boards, and a plurality of boards may jointly support a radio access network (for example, an LTE network) with a single access indication, or may separately support radio access networks (for example, an LTE network, a 5G network, or another network) of different access standards. The BBU 1302 further includes a memory 13021 and a processor 13022. The memory 13021 is configured to store necessary instructions and necessary data. For example, the memory 13021 stores a correspondence between a codebook index and a precoding matrix in the foregoing embodiments. The processor 13022 is configured to control the base station to perform a necessary action, for example, configured to control the base station to perform an operation procedure related to the network device in the foregoing method embodiments. The memory 13021 and the processor 13022 may serve one or more boards. In other words, a memory and a processor may be separately disposed on each board. Alternatively, the plurality of boards may share a same memory and a same processor. In addition, a necessary circuit may be further disposed on each board.

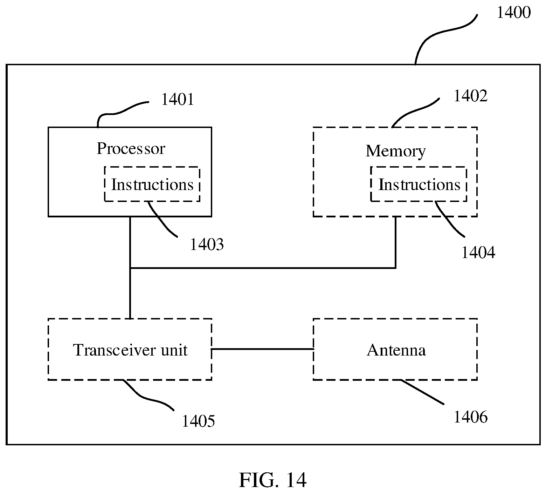

FIG. 14 is a schematic diagram of a structure of a communication apparatus 1400. The apparatus 1400 may be configured to implement the methods described in the foregoing method embodiments. For details, refer to the descriptions in the foregoing method embodiments. The communication apparatus 1400 may be a chip, a network device (such as a base station), a terminal device, another network device, or the like.

The communication apparatus 1400 includes one or more processors 1401. The processor 1401 may be a general-purpose processor, a dedicated processor, or the like. For example, the processor may be a baseband processor or a central processing unit. The baseband processor may be configured to process a communication protocol and communication data. The central processing unit may be configured to control the communication apparatus (for example, a base station, a terminal, or a chip), execute a software program, and process data of the software program. The communication apparatus may include a transceiver unit that is configured to input (receive) and output (send) a signal. For example, the communication apparatus may be a chip, and the transceiver unit may be an input and/or output circuit or a communication interface of the chip. The chip may be used for a terminal, a base station, or another network device. For another example, the communication apparatus may be a terminal, a base station, or another network device, and the transceiver unit may be a transceiver, a radio frequency chip, or the like.

The communication apparatus 1400 includes the one or more processors 1401, and the one or more processors 1401 may implement the method performed by the network device or the terminal device in the embodiment shown in FIG. 4.

In a possible design, the communication apparatus 1400 is configured to receive indication information, and configured to determine a fourth PUCCH resource, for example, may generate first indication information by using the one or more processors, and send the first indication information by using the transceiver, the input/output circuit, or an interface of the chip. For the first indication information, refer to related descriptions in the foregoing method embodiments.

In a possible design, the communication apparatus 1400 is configured to receive indication information, and configured to determine a PUCCH resource. For details, refer to related descriptions in the foregoing method embodiments. For example, the first indication information may be received by using the transceiver, the input/output circuit, or the interface of the chip, and a second parameter is determined by using the one or more processors.

Optionally, the processor 1401 may further implement another function in addition to the method in the embodiment shown in FIG. 4.

Optionally, in a design, the processor 1401 may further include instructions 1403. The instructions may be run on the processor, so that the communication apparatus 1400 performs the methods described in the foregoing method embodiments.

In still another possible design, the communication apparatus 1400 may further include a circuit. The circuit may implement a function of the network device or the terminal device in the foregoing method embodiments.

In still another possible design, the communication apparatus 1400 may include one or more memories 1402. The memory stores instructions 1404. The instructions may be run on the processor, so that the communication apparatus 1400 performs the methods described in the foregoing method embodiments. Optionally, the memory may further store data. Optionally, the processor may also store instructions and/or data. For example, the one or more memories 1402 may store the correspondence described in the foregoing embodiments, or the related parameter or table provided in the foregoing embodiments. The processor and the memory may be disposed separately, or may be integrated.

In still another possible design, the communication apparatus 1400 may further include a transceiver unit 1405 and an antenna 1406. The processor 1401 may be referred to as a processing unit, and controls the communication apparatus (a terminal or a base station). The transceiver unit 1405 may be referred to as a transceiver, a transceiver circuit, a transceiver machine, or the like, and is configured to implement a transceiver function of the communication apparatus by using the antenna 1406.

This application further provides a communication system, including the foregoing one or more network devices and one or more terminal devices.

It should be understood that the processor in the embodiments of this application may be a central processing unit (Central Processing Unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or may be any conventional processor or the like.

A person of ordinary skill in the art may be aware that units, algorithms, and steps in the examples described with reference to the embodiments disclosed in this application can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

It should be understood that, the communication apparatus 1400 shown in FIG. 14 can implement each process related to the terminal device in the method embodiments in FIG. 4 to FIG. 10. Operations and/or functions of various modules in the communication apparatus 1400 are intended to implement corresponding procedures in the method embodiments of FIG. 4 to FIG. 10. For details, refer to the descriptions in the foregoing method embodiment. To avoid repetition, detailed descriptions are properly omitted herein.

It should be understood that the processor 13022 or the processor 1410 in the embodiments of this application may be implemented by using a processing unit or a chip. Optionally, the transceiver includes a video unit 13012 or a transceiver unit 1405. This is not limited in the embodiments of this application.

It should be noted that, the processor in the embodiments of this application may be an integrated circuit chip, and has a signal processing capability. In an implementation process, the steps in the foregoing method embodiments may be completed by using a hardware integrated logic circuit in the processor or instructions in a form of software. The processor may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform the methods, the steps, and logical block diagrams that are disclosed in the embodiments of this application. The general-purpose processor may be a microprocessor, or may be any conventional processor or the like. The steps of the methods disclosed with reference to the embodiments of this application may be directly performed and completed by a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in the embodiments of this application may be a volatile memory or a non-volatile memory, or may include both a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that, the memory in the system and method described in this specification includes but is not limited to these memories and any memory of another proper type.

An embodiment of this application further provides a computer-readable medium. The computer-readable medium stores a computer program. When the computer program is executed by a computer, the method in any one of the foregoing method embodiments is implemented.

An embodiment of this application further provides a computer program product. When the computer program product is executed by a computer, the method in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), a semiconductor medium (for example, a solid-state drive (Solid State Disk, SSD)), or the like.

It should be understood that the processing apparatus may be a chip. The processor may be implemented by hardware, or may be implemented by software. When implemented by the hardware, the processor may be a logic circuit, an integrated circuit, or the like. When implemented by the software, the processor may be a general-purpose processor. The general-purpose processor is implemented by reading software code stored in a memory. The memory may be integrated into the processor, may be located outside the processor, or may exist independently.

It should be understood that "one embodiment" or "an embodiment" mentioned in the entire specification does not mean that particular features, structures, or characteristics related to the embodiment are included in at least one embodiment of this application. Therefore, "in one embodiment" or "in an embodiment" appearing in the specification does not refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

In addition, the terms "system" and "network" may be used interchangeably in this specification. The term "and/or" in this specification describes only an association relationship for associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of this application, "B corresponding to A" indicates that B is associated with A, and B may be determined based on A. However, it should be further understood that determining B based on A does not mean that B is determined based on only A. B may alternatively be determined based on A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether these functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments in this application.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

With descriptions of the foregoing implementations, a person skilled in the art may clearly understand that this application may be implemented by hardware, firmware, or a combination thereof. When this application is implemented by software, the foregoing functions may be stored in a computer-readable medium or transmitted as one or more instructions or code in the computer-readable medium. The computer-readable medium includes a computer storage medium and a communication medium. The communication medium includes any medium that facilitates transmission of a computer program from one place to another. The storage medium may be any available medium accessible to a computer. The following provides an example but does not impose a limitation: The computer-readable medium may include a RAM, a ROM, an EEPROM, a CD-ROM, another compact disc storage or magnetic disk storage medium, another magnetic storage device, or any other medium that can carry or store expected program code in a form of instructions or a data structure and can be accessed by the computer. In addition, any connection may be properly defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. A disk (Disk) and disc (disc) used by this application includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

## Claims

1. A communication method, comprising:
determining (401) a first physical uplink control channel, PUCCH, resource, a second PUCCH resource, and a third PUCCH resource, wherein
the first PUCCH resource is used to carry first uplink control information, UCI, the second PUCCH resource is used to carry second UCI, and the third PUCCH resource is used to carry third UCI; and the first PUCCH resource and the third PUCCH resource at least partially overlap in time domain, the second PUCCH resource and the third PUCCH resource at least partially overlap in time domain, the first PUCCH resource and the third PUCCH resource have a same priority, and the second PUCCH resource and the third PUCCH resource have different priorities; and
determining (402) a fourth PUCCH resource, wherein the fourth PUCCH resource is used to transmit the first UCI and the third UCI;
wherein the priority of each of the first, second, and third PUCCH resources is determined based on the priority of the respective first, second, and third UCIs carried by said first, second, and third PUCCH resources.

2. The method according to claim 1, further comprising:
determining that the first PUCCH resource and the third PUCCH resource have the same priority, and determining that the second PUCCH resource and the third PUCCH resource have the different priorities.

3. The method according to claim 1 or 2, wherein a start symbol of the first PUCCH resource is earlier than a start symbol of the second PUCCH resource.

4. The method according to claim 1 or 2, wherein a start symbol of the second PUCCH resource is earlier than a start symbol of the first PUCCH resource.

5. The method according to any one of claims 1 to 4, wherein the first UCI and the second UCI are hybrid automatic repeat request, HARQ, acknowledegment messages, and the third UCI is at least one of a HARQ acknowledegment message, channel state information, CSI, and a scheduling request, SR; or
the first UCI and the second UCI are at least one of a HARQ acknowledegment message, CSI, and an SR, and the third UCI is a HARQ acknowledegment message.

6. The method according to any one of claims 1 to 5, wherein the first PUCCH resource and the second PUCCH resource do not overlap at all in time domain; or the first PUCCH resource and the second PUCCH resource at least partially overlap in time domain, and the first PUCCH resource and the second PUCCH resource have different priorities.

7. The method according to any one of claims 1 to 6, further comprising:
when the fourth PUCCH resource and the second PUCCH resource do not overlap at all in time domain, transmitting the first UCI and the third UCI by using the fourth PUCCH resource.

8. The method according to any one of claims 1 to 7, further comprising:
when the fourth PUCCH resource and the second PUCCH resource at least partially overlap in time domain and the fourth PUCCH resource and the second PUCCH resource have different priorities, transmitting the first UCI and the third UCI by using the fourth PUCCH resource and determining to stop using the second PUCCH resource to transmit the second UCI, or transmitting the second UCI by using the second PUCCH resource and determining to stop using the fourth PUCCH resource to transmit the first UCI and the third UCI.

9. The method according to any one of claims 1 to 8, further comprising:
when the fourth PUCCH resource and the second PUCCH resource at least partially overlap in time domain and the fourth PUCCH resource and the second PUCCH resource have a same priority, determining a fifth PUCCH resource, wherein the fifth PUCCH resource is used to transmit the first UCI, the second UCI, and the third UCI.

10. The method according to claim 8, wherein the transmitting the first UCI and the third UCI by using the fourth PUCCH resource and determining to stop using the second PUCCH resource to transmit the second UCI, or transmitting the second UCI by using the second PUCCH resource and determining to stop using the fourth PUCCH resource to transmit the first UCI and the third UCI, comprises:
when a priority of the fourth PUCCH resource is higher than a priority of the second PUCCH resource, transmitting the first UCI and the third UCI by using the fourth PUCCH resource, and determining to stop using the second PUCCH resource to transmit the second UCI; or
when a priority of the fourth PUCCH resource is not higher than a priority of the second PUCCH resource, transmitting the second UCI by using the second PUCCH resource, and determining to stop using the fourth PUCCH resource to transmit the first UCI and the third UCI.

11. An uplink control information transmission method, comprising:
determining (1001) a first physical uplink control channel, PUCCH, resource, a second PUCCH resource, and a third PUCCH resource, wherein
the first PUCCH resource is used to transmit first uplink control information, UCI, the second PUCCH resource is used to transmit second UCI, and the third PUCCH resource is used to transmit third UCI; and the first PUCCH resource and the third PUCCH resource at least partially overlap in time domain, the second PUCCH resource and the third PUCCH resource at least partially overlap in time domain, a start symbol of the first PUCCH resource is earlier than a start symbol of the second PUCCH resource, the first PUCCH resource and the third PUCCH resource have different priorities, and the second PUCCH resource and the third PUCCH resource have a same priority; and
when a priority of the first PUCCH resource is higher than a priority of the third PUCCH resource, transmitting (1002) the first UCI by using the first PUCCH resource, transmitting (1002) the second UCI by using the second PUCCH resource, and determining (1002) to stop using the third PUCCH resource to transmit the third UCI;
wherein the priority of each of the first, second, and third PUCCH resources is determined based on the priority of the respective first, second, and third UCIs carried by said first, second, and third PUCCH resources.

12. The method according to claim 11, wherein the first UCI and the second UCI are at least one of a hybrid automatic repeat request, HARQ, acknowledegment message, channel state information, CSI, and a scheduling request, SR, and the third UCI is a HARQ acknowledegment message.

13. The method according to claim 11 or 12, wherein the first PUCCH resource and the second PUCCH resource do not overlap at all in time domain; or the first PUCCH resource and the second PUCCH resource at least partially overlap in time domain, and the first PUCCH resource and the second PUCCH resource have different priorities.

14. The method according to any one of claims 11 to 13, further comprising:
when the priority of the first PUCCH resource is not higher than the priority of the third PUCCH resource, determining to stop using the first PUCCH resource to transmit the first UCI; and
determining a fourth PUCCH resource, wherein the fourth PUCCH resource is used to transmit the second UCI and the third UCI.

15. The method according to any one of claims 1 to 14, wherein the priority of the respective first, second, and third UCIs is expressed by a priority index.

16. The method according to any one of claims 1 to 14, wherein the priority of the respective first, second, and third UCIs is determined based on a UCI type, or, a UCI type and a transmission parameter.

17. An apparatus, comprising a processor, wherein the processor is coupled to a memory;
the memory is configured to store a computer program or instructions; and
the processor is configured to execute the computer program or the instructions stored in the memory to cause the apparatus to perform the method according to any one of claims 1 to 10, or the method of any one of claims 15 or 16 when dependent on claim 1, or to cause the apparatus to perform the method according to any one of claims 11 to 14, or the method according to any one of claims 15 or 16 when dependent on claim 11.

18. A communication system, the communication system comprising: a first apparatus configured to perform the method according to any one of claims 1 to 10, or the method of any one of claims 15 or 16 when dependent on claim 1, and a second apparatus configured to receive the first UCI and the third UCI from the first apparatus, or the communication system comprising: a first apparatus configured to perform the method according to any one of claims 11 to 14, or the method of any one of claims 15 or 16 when dependent on claim 11, and a second apparatus configured to receive the first UCI and the second UCI from the first apparatus.

19. A program, comprising instructions which, when executed by a processor of an apparatus, cause the apparatus to perform the method according to any one of claims 1 to 10, or the method of any one of claims 15 or 16 when dependent on claim 1, or cause the apparatus to perform the method according to any one of claims 11 to 14, or the method according to any one of claims 15 or 16 when dependent on claim 11.

## Patentansprüche

1. Kommunikationsverfahren, umfassend:
Bestimmen (401) einer ersten physikalischen Uplink-Steuerkanalressource, PUCCH-Ressource, einer zweiten PUCCH-Ressource und einer dritten PUCCH-Ressource, wobei die erste PUCCH-Ressource verwendet wird, um erste Uplink-Steuerungsinformationen, UCI, zu übertragen, die zweite PUCCH-Ressource verwendet wird, um zweite UCI zu übertragen, und die dritte PUCCH-Ressource verwendet wird, um dritte UCI zu übertragen; und sich die erste PUCCH-Ressource und die dritte PUCCH-Ressource mindestens teilweise im Zeitbereich überlappen, sich die zweite PUCCH-Ressource und die dritte PUCCH-Ressource mindestens teilweise im Zeitbereich überlappen, die erste PUCCH-Ressource und die dritte PUCCH-Ressource dieselbe Priorität aufweisen, und die zweite PUCCH-Ressource und die dritte PUCCH-Ressource unterschiedliche Prioritäten aufweisen; und
Bestimmen (402) einer vierten PUCCH-Ressource, wobei die vierte PUCCH-Ressource verwendet wird, um die ersten UCI und die dritten UCI zu übermitteln;
wobei die Priorität jeder der ersten, der zweiten und der dritten PUCCH-Ressource basierend auf der Priorität der jeweiligen ersten, zweiten und dritten UCIs bestimmt wird, die durch die erste, die zweite und die dritte PUCCH-Ressource übertragen werden.

2. Verfahren nach Anspruch 1, ferner umfassend:
Bestimmen, dass die erste PUCCH-Ressource und die dritte PUCCH-Ressource dieselbe Priorität aufweisen, und Bestimmen, dass die zweite PUCCH-Ressource und die dritte PUCCH-Ressource die unterschiedlichen Prioritäten aufweisen.

3. Verfahren nach Anspruch 1 oder 2, wobei ein Startsymbol der ersten PUCCH-Ressource früher als ein Startsymbol der zweiten PUCCH-Ressource liegt.

4. Verfahren nach Anspruch 1 oder 2, wobei ein Startsymbol der zweiten PUCCH-Ressource früher als ein Startsymbol der ersten PUCCH-Ressource liegt.

5. Verfahren nach einem der Ansprüche 1 bis 4, wobei die ersten UCI und die zweiten UCI Bestätigungsnachrichten für die hybride automatische Wiederholungsanforderung, HARQ-Bestätigungsnachrichten, sind und die dritten UCI mindestens eine HARQ-Bestätigungsnachricht, Kanalzustandsinformationen, CSI, oder eine Planungsanforderung, SR, sind; oder
die ersten UCI und die zweiten UCI mindestens eines von einer HARQ-Bestätigungsnachricht, CSI und einer SR sind, und die dritten UCI eine HARQ-Bestätigungsnachricht sind.

6. Verfahren nach einem der Ansprüche 1 bis 5, wobei sich die erste PUCCH-Ressource und die zweite PUCCH-Ressource im Zeitbereich gar nicht überlappen; oder sich die erste PUCCH-Ressource und die zweite PUCCH-Ressource im Zeitbereich mindestens teilweise überlappen, und die erste PUCCH-Ressource und die zweite PUCCH-Ressource unterschiedliche Prioritäten aufweisen.

7. Verfahren nach einem der Ansprüche 1 bis 6, ferner umfassend:
wenn sich die vierte PUCCH-Ressource und die zweite PUCCH-Ressource im Zeitbereich gar nicht überlappen, Übermitteln der ersten UCI und der dritten UCI unter Verwendung der vierten PUCCH-Ressource.

8. Verfahren nach einem der Ansprüche 1 bis 7, ferner umfassend:
wenn sich die vierte PUCCH-Ressource und die zweite PUCCH-Ressource mindestens teilweise im Zeitbereich überlappen, und die vierte PUCCH-Ressource und die zweite PUCCH-Ressource unterschiedliche Prioritäten aufweisen, Übertragen der ersten UCI und der dritten UCI unter Verwendung der vierten PUCCH-Ressource und Bestimmen, das Verwenden der zweiten PUCCH-Ressource zu beenden, um die zweiten UCI zu übermitteln, oder Übermitteln der zweiten UCI unter Verwendung der zweiten PUCCH-Ressource und Bestimmen, das Verwenden der vierten PUCCH-Ressource z beenden, um die ersten UCI und die dritten UCI zu übermitteln.

9. Verfahren nach einem der Ansprüche 1 bis 8, ferner umfassend:
wenn sich die vierte PUCCH-Ressource und die zweite PUCCH-Ressource mindestens teilweise im Zeitbereich überlappen und die vierte PUCCH-Ressource und die zweite PUCCH-Ressource dieselbe Priorität aufweisen, Bestimmen einer fünften PUCCH-Ressource, wobei die fünfte PUCCH-Ressource verwendet wird, um die ersten UCI, die zweiten UCI und die dritten UCI zu übermitteln.

10. Verfahren nach Anspruch 8, wobei das Übermitteln der ersten UCI und der dritten UCI unter Verwendung der vierten PUCCH-Ressource und das Bestimmen, das Verwenden der zweiten PUCCH-Ressource zu beenden, um die zweiten UCI zu übermitteln, oder das Übermitteln der zweiten UCI unter Verwendung der zweiten PUCCH-Ressource und das Bestimmen, das Verwenden der vierten PUCCH-Ressource zu beenden, um die ersten UCI und die dritten UCI zu übermitteln, Folgendes umfasst:
wenn eine Priorität der vierten PUCCH-Ressource höher als eine Priorität der zweiten PUCCH-Ressource ist, Übermitteln der ersten UCI und der dritten UCI unter Verwendung der vierten PUCCH-Ressource und Bestimmen, das Verwenden der zweiten PUCCH-Ressource zu beenden, um die zweiten UCI zu übermitteln; oder
wenn eine Priorität der vierten PUCCH-Ressource nicht höher als eine Priorität der zweiten PUCCH-Ressource ist, Übermitteln der zweiten UCI unter Verwendung der zweiten PUCCH-Ressource und Bestimmen, das Verwenden der vierten PUCCH-Ressource zu beenden, um die ersten UCI und die dritten UCI zu übermitteln.

11. Verfahren zur Übermittelung von Uplink-Steuerungsinformationen, umfassend:
Bestimmen (1001) einer ersten physikalischen Uplink-Steuerkanalressource, PUCCH-Ressource, einer zweiten PUCCH-Ressource und einer dritten PUCCH-Ressource, wobei die erste PUCCH-Ressource verwendet wird, um erste Uplink-Steuerungsinformationen, UCI, zu übermitteln, die zweite PUCCH-Ressource verwendet wird, um zweite UCI zu übermitteln, und die dritte PUCCH-Ressource verwendet wird, um dritte UCI zu übermitteln; und sich die erste PUCCH-Ressource und die dritte PUCCH-Ressource mindestens teilweise im Zeitbereich überlappen, sich die zweite PUCCH-Ressource und die dritte PUCCH-Ressource mindestens teilweise im Zeitbereich überlappen, ein Startsymbol der ersten PUCCH-Ressource früher als ein Startsymbol der zweiten PUCCH-Ressource liegt, die erste PUCCH-Ressource und die dritte PUCCH-Ressource unterschiedliche Prioritäten aufweisen, und die zweite PUCCH-Ressource und die dritte PUCCH-Ressource dieselbe Priorität aufweisen; und
wenn eine Priorität der ersten PUCCH-Ressource höher als eine Priorität der dritten PUCCH-Ressource ist, Übermitteln (1002) der ersten UCI unter Verwendung der ersten PUCCH-Ressource, Übermitteln (1002) der zweiten UCI unter Verwendung der zweiten PUCCH-Ressource und Bestimmen (1002), das Verwenden der dritten PUCCH-Ressource zu beenden, um die dritten UCI zu übermitteln; wobei die Priorität jeder der ersten, der zweiten und der dritten PUCCH-Ressource basierend auf der Priorität der jeweiligen ersten, zweiten und dritten UCIs bestimmt wird, die durch die erste, die zweite und die dritte PUCCH-Ressource übertragen werden.

12. Verfahren nach Anspruch 11, wobei die ersten UCI und die zweiten UCI mindestens eine von einer Bestätigungsnachricht für die hybride automatische Wiederholungsanforderung, HARQ-Bestätigungsnachricht, Kanalzustandsinformationen, CSI, und einer Planungsanforderung, SR, sind und die dritten UCI eine HARQ-Bestätigungsnachricht sind.

13. Verfahren nach Anspruch 11 oder 12, wobei sich die erste PUCCH-Ressource und die zweite PUCCH-Ressource im Zeitbereich gar nicht überlappen; oder sich die erste PUCCH-Ressource und die zweite PUCCH-Ressource im Zeitbereich mindestens teilweise überlappen, und die erste PUCCH-Ressource und die zweite PUCCH-Ressource unterschiedliche Prioritäten aufweisen.

14. Verfahren nach einem der vorhergehenden Ansprüche 11 bis 13, ferner umfassend:
wenn die Priorität der ersten PUCCH-Ressource nicht höher als die Priorität der dritten PUCCH-Ressource ist, Bestimmen, das Verwenden der ersten PUCCH-Ressource zu beenden, um die ersten UCI zu übermitteln; und
Bestimmen einer vierten PUCCH-Ressource, wobei die vierte PUCCH-Ressource verwendet wird, um die zweiten UCI und die dritten UCI zu übermitteln.

15. Verfahren nach einem der Ansprüche 1 bis 14, wobei die Priorität der jeweiligen ersten, zweiten und dritten UCIs durch einen Prioritätsindex ausgedrückt wird.

16. Verfahren nach einem der Ansprüche 1 bis 14, wobei die Priorität der jeweiligen ersten, zweiten und dritten UCIs basierend auf einem UCI-Typ oder einem UCI-Typ und einem Übermittlungsparameter bestimmt wird.

17. Vorrichtung, umfassend einen Prozessor, wobei der Prozessor mit einem Speicher gekoppelt ist;
der Speicher dazu konfiguriert ist, ein Computerprogramm oder Anweisungen zu speichern; und
der Prozessor dazu konfiguriert ist, das Computerprogramm oder die Anweisungen auszuführen, die in dem Speicher gespeichert sind, um zu bewirken, dass die Vorrichtung das Verfahren nach einem der Ansprüche 1 bis 10 durchführt oder das Verfahren nach einem der Ansprüche 15 oder 16 in Abhängigkeit von Anspruch 1 durchführt, oder um zu bewirken, dass die Vorrichtung das Verfahren nach einem der Ansprüche 11 bis 14 durchführt oder das Verfahren nach einem der Ansprüche 15 oder 16 in Abhängigkeit von Anspruch 11 durchführt.

18. Kommunikationssystem, wobei das Kommunikationssystem Folgendes umfasst:
eine erste Vorrichtung, die dazu konfiguriert ist, das Verfahren nach einem der Ansprüche 1 bis 10 oder das Verfahren nach einem der Ansprüche 15 oder 16 in Abhängigkeit von Anspruch 1 durchzuführen, und eine zweite Vorrichtung, die dazu konfiguriert ist, die ersten UCI und die dritten UCI aus der ersten Vorrichtung zu empfangen, oder wobei das Kommunikationssystem Folgendes umfasst:
eine erste Vorrichtung, die dazu konfiguriert ist, das Verfahren nach einem der Ansprüche 11 bis 14 oder das Verfahren nach einem der Ansprüche 15 oder 16 in Abhängigkeit von Anspruch 11 durchzuführen, und eine zweite Vorrichtung, die dazu konfiguriert ist, die ersten UCI und die zweiten UCI aus der ersten Vorrichtung zu empfangen.

19. Programm, umfassend Anweisungen, welche bei Ausführung durch den Prozessor einer Vorrichtung bewirken, dass die Vorrichtung das Verfahren nach einem der Ansprüche 1 bis 10 durchführt oder das Verfahren nach einem der Ansprüche 15 oder 16 in Abhängigkeit von Anspruch 1 durchführt, oder bewirken, dass die Vorrichtung das Verfahren nach einem der Ansprüche 11 bis 14 durchführt oder das Verfahren nach einem der Ansprüche 15 oder 16 in Abhängigkeit von Anspruch 11 durchführt.

## Revendications

1. Procédé de communication, comprenant :
la détermination (401) d'une première ressource de canal de commande de liaison montante physique, PUCCH, d'une deuxième ressource PUCCH et d'une troisième ressource PUCCH, dans lequel la première ressource PUCCH est utilisée pour transporter les premières informations de commande de liaison montante, UCI, la deuxième ressource PUCCH est utilisée pour transporter les deuxièmes UCI et la troisième ressource PUCCH est utilisée pour transporter les troisièmes UCI ; et la première ressource PUCCH et la troisième ressource PUCCH se chevauchent au moins partiellement dans le domaine temporel, la deuxième ressource PUCCH et la troisième ressource PUCCH se chevauchent au moins partiellement dans le domaine temporel, la première ressource PUCCH et la troisième ressource PUCCH ont une même priorité, et la deuxième ressource PUCCH et la troisième ressource PUCCH ont des priorités différentes ; et
la détermination (402) d'une quatrième ressource PUCCH, dans lequel la quatrième ressource PUCCH est utilisée pour transmettre les premières UCI et les troisièmes UCI ;
dans lequel la priorité de chacune des première, deuxième et troisième ressources PUCCH est déterminée en fonction de la priorité des premières, deuxièmes et troisièmes UCI respectives transportées par lesdites première, deuxième et troisième ressources PUCCH.

2. Procédé selon la revendication 1, comprenant en outre :
le fait de déterminer que la première ressource PUCCH et la troisième ressource PUCCH ont la même priorité, et le fait de déterminer que la deuxième ressource PUCCH et la troisième ressource PUCCH ont des priorités différentes.

3. Procédé selon la revendication 1 ou 2, dans lequel un symbole de départ de la première ressource PUCCH est antérieur à un symbole de départ de la deuxième ressource PUCCH.

4. Procédé selon la revendication 1 ou 2, dans lequel un symbole de départ de la deuxième ressource PUCCH est antérieur à un symbole de départ de la première ressource PUCCH.

5. Procédé selon l'une quelconque des revendications 1 à 4, dans lequel les premières UCI et les deuxièmes UCI sont des messages d'acquittement de demande de répétition automatique hybride, HARQ, et les troisièmes UCI sont au moins l'un d'un message d'acquittement HARQ, d'une information d'état du canal, CSI, ou d'une demande de planification, SR ; ou
les premières UCI et les deuxièmes UCI sont au moins l'un d'un message d'acquittement HARQ, d'une CSI et d'une SR, et les troisièmes UCI sont un message d'acquittement HARQ.

6. Procédé selon l'une quelconque des revendications 1 à 5, dans lequel la première ressource PUCCH et la deuxième ressource PUCCH ne se chevauchent pas du tout dans le domaine temporel ; ou la première ressource PUCCH et la deuxième ressource PUCCH se chevauchent au moins partiellement dans le domaine temporel, et la première ressource PUCCH et la deuxième ressource PUCCH ont des priorités différentes.

7. Procédé selon l'une quelconque des revendications 1 à 6, comprenant en outre :
lorsque la quatrième ressource PUCCH et la deuxième ressource PUCCH ne se chevauchent pas du tout dans le domaine temporel, la transmission des premières UCI et des troisièmes UCI à l'aide de la quatrième ressource PUCCH.

8. Procédé selon l'une quelconque des revendications 1 à 7, comprenant en outre :
lorsque la quatrième ressource PUCCH et la deuxième ressource PUCCH se chevauchent au moins partiellement dans le domaine temporel et que la quatrième ressource PUCCH et la deuxième ressource PUCCH ont des priorités différentes, la transmission des premières UCI et des troisièmes UCI à l'aide de la quatrième ressource PUCCH et la détermination d'arrêter d'utiliser la deuxième ressource PUCCH pour transmettre les deuxièmes UCI, ou la transmission des deuxièmes UCI à l'aide de la deuxième ressource PUCCH et la détermination d'arrêter d'utiliser la quatrième ressource PUCCH pour transmettre les premières UCI et les troisièmes UCI.

9. Procédé selon l'une quelconque des revendications 1 à 8, comprenant en outre :
lorsque la quatrième ressource PUCCH et la deuxième ressource PUCCH se chevauchent au moins partiellement dans le domaine temporel et que la quatrième ressource PUCCH et la deuxième ressource PUCCH ont une même priorité, la détermination d'une cinquième ressource PUCCH, dans lequel la cinquième ressource PUCCH est utilisée pour transmettre les premières UCI, les deuxièmes UCI et les troisièmes UCI.

10. Procédé selon la revendication 8, dans lequel la transmission des premières UCI et des troisièmes UCI à l'aide de la quatrième ressource PUCCH et la détermination d'arrêter d'utiliser la deuxième ressource PUCCH pour transmettre les deuxièmes UCI, ou la transmission des deuxièmes UCI à l'aide de la deuxième ressource PUCCH et la détermination d'arrêter d'utiliser la quatrième ressource PUCCH pour transmettre les premières UCI et les troisièmes UCI, comprend :
lorsqu'une priorité de la quatrième ressource PUCCH est supérieure à une priorité de la deuxième ressource PUCCH, la transmission des premières UCI et des troisièmes UCI à l'aide de la quatrième ressource PUCCH, et la détermination d'arrêter d'utiliser la deuxième ressource PUCCH pour transmettre les deuxièmes UCI ; ou
lorsqu'une la priorité de la quatrième ressource PUCCH n'est pas supérieure à une priorité de la deuxième ressource PUCCH, la transmission des deuxièmes UCI à l'aide de la deuxième ressource PUCCH, et la détermination d'arrêter d'utiliser la quatrième ressource PUCCH pour transmettre les premières UCI et les troisièmes UCI.

11. Procédé de transmission d'informations de commande de liaison montante, comprenant :
la détermination (1001)
d'une première ressource de canal de commande de liaison montante physique, PUCCH, d'une deuxième ressource PUCCH et d'une troisième ressource PUCCH, dans lequel
la première ressource PUCCH est utilisée pour transmettre les premières informations de commande de liaison montante, UCI, la deuxième ressource PUCCH est utilisée pour transmettre les deuxièmes UCI et la troisième ressource PUCCH est utilisée pour transmettre les troisièmes UCI ; et la première ressource PUCCH et la troisième ressource PUCCH se chevauchent au moins partiellement dans le domaine temporel, la deuxième ressource PUCCH et la troisième ressource PUCCH se chevauchent au moins partiellement dans le domaine temporel, un symbole de départ de la première ressource PUCCH est antérieur à un symbole de départ de la deuxième ressource PUCCH, la première ressource PUCCH et la troisième ressource PUCCH ont des priorités différentes, et la deuxième ressource PUCCH et la troisième ressource PUCCH ont une même priorité ; et
lorsqu'une priorité de la première ressource PUCCH est supérieure à une priorité de la troisième ressource PUCCH, la transmission (1002) des premières UCI à l'aide de la première ressource PUCCH, la transmission (1002) des deuxièmes UCI à l'aide de la deuxième ressource PUCCH, et la détermination (1002) d'arrêter d'utiliser la troisième ressource PUCCH pour transmettre les troisièmes UCI ;
dans lequel la priorité de chacune des première, deuxième et troisième ressources PUCCH est déterminée en fonction de la priorité des premières, deuxièmes et troisièmes UCI respectives transportées par lesdites première, deuxième et troisième ressources PUCCH.

12. Procédé selon la revendication 11, dans lequel les premières UCI et les deuxièmes UCI sont au moins l'un d'un message d'acquittement de demande de répétition automatique hybride, HARQ, d'une information d'état du canal, CSI, et d'une demande de planification, SR, et les troisièmes UCI sont un message d'acquittement HARQ.

13. Procédé selon l'une quelconque des revendications 11 ou 12, dans lequel la première ressource PUCCH et la deuxième ressource PUCCH ne se chevauchent pas du tout dans le domaine temporel ; ou la première ressource PUCCH et la deuxième ressource PUCCH se chevauchent au moins partiellement dans le domaine temporel, et la première ressource PUCCH et la deuxième ressource PUCCH ont des priorités différentes.

14. Procédé selon l'une quelconque des revendications 11 à 13, comprenant en outre :
lorsque la priorité de la première ressource PUCCH n'est pas supérieure à la priorité de la troisième ressource PUCCH, la détermination d'arrêter d'utiliser la première ressource PUCCH pour transmettre les premières UCI ; et
la détermination d'une quatrième ressource PUCCH, dans lequel la quatrième ressource PUCCH est utilisée pour transmettre les deuxièmes UCI et les troisièmes UCI.

15. Procédé selon l'une quelconque des revendications 1 à 14, dans lequel la priorité des premières, deuxièmes et troisièmes UCI respectives est exprimée par un indice de priorité.

16. Procédé selon l'une quelconque des revendications 1 à 14, dans lequel la priorité des premières, deuxièmes et troisièmes UCI respectives est déterminée en fonction d'un type d'UCI, ou d'un type d'UCI et d'un paramètre de transmission.

17. Appareil, comprenant un processeur, dans lequel le processeur est couplé à une mémoire ;
la mémoire est configurée pour stocker un programme informatique ou des instructions ; et
le processeur est configuré pour exécuter le programme informatique ou les instructions stockées dans la mémoire afin d'amener l'appareil à réaliser le procédé selon l'une quelconque des revendications 1 à 10, ou le procédé selon l'une quelconque des revendications 15 ou 16 lorsqu'il dépend de la revendication 1, ou pour amener l'appareil à réaliser le procédé selon l'une quelconque des revendications 11 à 14, ou le procédé selon l'une quelconque des revendications 15 ou 16 lorsqu'il dépend de la revendication 11.

18. Système de communication, le système de communication comprenant :
un premier appareil configuré pour réaliser le procédé selon l'une quelconque des revendications 1 à 10, ou le procédé selon l'une quelconque des revendications 15 ou 16 lorsqu'il dépend de la revendication 1, et un deuxième appareil configuré pour recevoir les premières UCI et les troisièmes UCI depuis le premier appareil, ou le système de communication comprenant :
un premier appareil configuré pour réaliser le procédé selon l'une quelconque des revendications 11 à 14, ou le procédé selon l'une quelconque des revendications 15 ou 16 lorsqu'il dépend de la revendication 11, et un deuxième appareil configuré pour recevoir les premières UCI et les deuxièmes UCI depuis le premier appareil.

19. Programme, comprenant des instructions qui, lorsqu'elles sont exécutées par un processeur d'un appareil, amènent l'appareil à réaliser le procédé selon l'une quelconque des revendications 1 à 10, ou le procédé selon l'une quelconque des revendications 15 ou 16 lorsqu'il dépend de la revendication 1, ou pour amener l'appareil à réaliser le procédé selon l'une quelconque des revendications 11 à 14, ou le procédé selon l'une quelconque des revendications 15 ou 16 lorsqu'il dépend de la revendication 11.
